# EUROPEAN PATENT SPECIFICATION

(11) **EP 2 207 847 B1**
(45) Date of publication and mention of the grant of the patent: **14.11.2012**
(21) Application number: 08849539.5
(22) Date of filing: 17.11.2008
(51) Int. Cl.: C08L 23/08, B32B 27/32, C08J 5/18

(54) **MULTILAYER ARTICLES CONTAINING BIMODAL IONOMER COMPOSITIONS**
MEHRLAGIGE GEGENSTÄNDE, ENTHALTEND BIMODALE IONOMERZUSAMMENSETZUNGEN
ARICLES MULTICOUCHES CONTENANT DES COMPOSITIONS D'IONOMÈRE BIMODALES

(30) Priority: 16.11.2007 US 3432
(43) Date of publication of application: 21.07.2010
(73) Proprietor: E. I. du Pont de Nemours and Company, Wilmington, DE 19898 (US)
(72) Inventor: CHEN, John, Chu, Hockessin Delaware 19707 (US); LEE, Han, Il, Broomfield, CO80023 (US)
(74) Representative: Dannenberger, Oliver Andre
(86) International application number: PCT/US2008/083727
(87) International publication number: WO 2009/065100

(56) References cited:
- WO-A-02/14422
- WO-A-2004/050362
- WO-A-2005/113670
- WO-A-2006/031965
- US-A- 4 846 910
- US-A1- 2002 037 968

## Description

### BACKGROUND OF THE INVENTION

### Field of the Invention

The invention relates to articles comprising bimodal ionomeric compositions comprising a high molecular weight E/X/Y copolymer and a low molecular weight E/Z copolymer.

### Description of Related Art

Several patents, patent applications and publications are cited in this description in order to more fully describe the state of the art to which this invention pertains.

In many articles of manufacture, such as consumer products, it is important that the properties of the article's surface be both practical and pleasing. Polymeric materials may provide important surface properties such as resistance to marring from wear, abrasion, scuffing, and scratching, and mechanical strength and toughness.

Decorative films, for example, may be used for preparing appliqués for athletic shoes. Decorative films may have at least one wear resistant outer layer that is characterized by properties such as high flexibility, high resistance to marring from wear, abrasion, scuffing, and scratching, and high mechanical strength and toughness. Such decorative films have been fabricated from thermoplastic urethanes (TPU).

Some compositions useful as decorative films may also be used or reformulated as coating compositions to provide wear resistant layers for fabrics and sheet goods. Coating compositions for these applications include TPU and plasticized or flexible polyvinyl chloride (f-PVC).

Films of f-PVC usually include a plasticizer such as a phthalate plasticizer to enhance film flexibility. The plasticizer may migrate out of the polymer over time, decreasing film flexibility and potentially contaminating materials in contact with the film. A desire for long-term flexibility and concern about the environmental impact of halogenated polymers such as f-PVC make another coating composition desirable as an alternative.

Bimodal ionomer compositions and their use in golf balls are described in U.S. Patents 6,562,906; 6,762,246; 7,037,967; and 7,273,903 and in U.S. Patent Application No. 11/893,831, filed on August 17, 2007. The bimodal ionomer compositions comprise an ethylene α,β-ethylenically unsaturated C₃₋₈ carboxylic acid copolymer having weight average molecular weight (Mw) of about 80,000 to about 500,000 Da (high copolymer) and an ethylene α,β-ethylenically unsaturated C₃₋₈ carboxylic acid copolymer having (Mw) of about 2,000 to about 30,000 Da (low copolymer).

Multilayer articles comprising such compositions for applications such as golf balls, golf ball components and spheres are disclosed in WO 02/14422 A1 and US 2002/0037968 A1.

### SUMMARY OF THE INVENTION

Described herein is a multilayer article that is a multilayer film, sheet or tube, or multilayer structure, said article having at least one surface layer comprising, consisting essentially of, or prepared from a bimodal ionomer composition comprising
(i) a copolymer comprising one or more E/X/Y copolymers wherein E represents copolymerized units of ethylene, X represents copolymerized units of a C₃ to C₈ α,β-ethylenically unsaturated carboxylic acid, and Y represents copolymerized units of a softening comonomer selected from the group consisting of vinyl acetate, alkyl acrylate and alkyl methacrylate, wherein the alkyl groups have from 1 to 8 carbon atoms, wherein the amount of X is from 2 to 30 weight % of the E/X/Y copolymer, and the amount of Y is from 0 to 45 weight % of the F/X/Y copolymer, and wherein the E/X/Y copolymers have weight average molecular weight (Mw) in the range of 80,000 to 500,000 Da; and
(ii) a copolymer comprising one or more E/Z copolymers wherein E represents copolymerized units of ethylene and Z represents copolymerized units of acrylic acid or methacrylic acid, wherein the amount of Z is 3 to 25 weight % of the E/Z copolymer and wherein the E/Z copolymers have Mw in the range of 2,000 to 30,000 Da;
   wherein at least 35 % of the combined acidic groups in the E/X/Y copolymer and the E/Z copolymer are nominally neutralized to form carboxylate salts.

Also provided is method for preparing the multilayer article comprising
(1) contacting a first surface of a bimodal ionomer composition with at least a portion of the surface of a first substrate and optionally contacting a second surface of the bimodal ionomer composition with at least a portion of the surface of a second substrate;
(2) applying high frequency electromagnetic radiation, and optionally pressure, heat, or a combination thereof, to the bimodal ionomer composition, thereby softening or melting the bimodal ionomer composition;
(3) allowing the softened or melted bimodal ionomer composition to harden, thereby bonding the first surface of the bimodal ionomer composition to the first substrate and bonding the second surface of the bimodal ionomer composition to the second substrate when present;
wherein the bimodal ionomer composition is as characterized above, and the first substrate and the optional second substrate are independently selected from the group consisting of thermoplastic film and sheet, cellular foams, woven, knilled and non-woven fabrics, paper, pulp and paperboard products, wood and wood products, metal, glass, stone, ceramic, and leather and leather-like products, thermoplastic resins, thermoset resins, and a second bimodal ionomer composition characterized as above.

An multilayer article of manufacture is also provided wherein at least a portion of the surface of the article comprises the bimodal ionomer composition.

### DETAILED DESCRIPTION OF THE INVENTION

The following definitions apply to terms used in this specification, unless otherwise limited in specific instances. The technical and scientific terms used herein have the meanings that are commonly understood by one of ordinary skill in the art to which this invention belongs. In case of conflict, the present specification, including the definitions herein, will control. Trademarks and trade names are printed in uppercase lettering.

As used herein, the terms "comprises," "comprising," "includes," "including," "containing," "characterized by," "has," "having" or any other variation thereof, refer to a non-exclusive inclusion. For example, a process, method, article, or apparatus that comprises a given list of elements is not necessarily limited to only those elements given, but may further include other elements not expressly listed or inherent to such process, method, article, or apparatus.

The transitional phrase "consisting of excludes any element, step, or ingredient not specified in the given list of elements, dosing the list to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of limits the scope of a claim to the specified materials or steps and those that do not materially affect the basic and novel characteristic(s) of the claimed invention. A 'consisting essentially of claim occupies a middle ground between closed claim that are written in a 'consisting of format and fully open claims that are drafted in a 'comprising' format. Optional additives as defined herein, at levels that are appropriate for such additives, and minor impurities are not excluded from a composition by the term "consisting essentially of".

When a composition, a process, a structure, or a portion of a composition, a process, or a structure, is described herein using an open-ended term such as "comprising," unless otherwise stated the description also includes an embodiment that "consists essentially of" or "consists of" the elements of the composition, the process, the structure, or the portion of the composition, the process, or the structure.

The articles "a" and "an" may be employed in connection with various elements and components of compositions, processes or structures described herein. This is merely for convenience and to give a general sense of the compositions, processes or structures. Such a description includes "one or at least one" of the elements or components. Moreover, as used herein, the singular articles also include a description of a plurality of elements or components, unless it is apparent from a specific context that the plural is excluded.

The term "or", as used herein, is inclusive; that is, the phrase "A or B" means "A, B, or both A and B". More specifically, a condition "A or B" is satisfied by any one of the following: A is true (or present) and B is false (or not present); A is false (or not present) and B is true (or present); or both A and B are true (or present). Exclusive "or" is designated herein by terms such as "either A or B" and "one of A or B", for example.

The term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such.

The ranges set forth herein include their endpoints unless expressly stated otherwise. When an amount, concentration, or other value or parameter is given as a range, one or more preferred ranges or a list of upper preferable values and lower preferable values, this is to be understood as specifically disclosing all ranges formed from any pair of any upper range limit or preferred value and any lower range limit or preferred value, regardless of whether such pairs are separately disclosed. The scope of the invention is not limited to the specific values recited when defining a range.

When materials, methods, or machinery are described herein with the term "known to those of skill in the art", "conventional" or a synonymous word or phrase, the term signifies that materials, methods, and machinery that are conventional at the time of filing the present application are encompassed by this description. Also encompassed are materials, methods, and machinery that are not presently conventional, but that may become recognized in the art as suitable for a similar purpose.

Unless stated otherwise, all percentages, parts, ratios, and like amounts, are defined by weight. "Finite amount" is any non-zero amount, such as 0.0001 weight %.

As used herein, the term "copolymer" refers to polymers comprising copolymerized units resulting from copolymerization of two or more comonomers. In this connection, a copolymer may be described herein with reference to its constituent comonomers or to the amounts of its constituent comonomers, for example "a copolymer comprising ethylene and 9 weight % of acrylic acid", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. It follows as a corollary that a copolymer is not the product of a reaction mixture containing given comonomers in given amounts, unless expressly stated in limited circumstances to be such. The term "dipolymer" refers to polymers consisting essentially of two monomers and the term "terpolymer" refers to polymers consisting essentially of three monomers.

The term "low copolymer" as used herein refers to the component of a bimodal composition that has the lower molecular weight. The term "high copolymer" as used herein refers to the component of a bimodal composition that has the higher molecular weight. The term "Mw" means weight average molecular weight and the term "Mn" means number average molecular weight. "Bimodal ionomer" refers to a mixture of a high copolymer and a low copolymer wherein the Mw of the high copolymer and the Mw of the low copolymer are sufficiently different such that two distinct molecular weight peaks are observed when measuring the Mw of the blend by gel permeation chromatography (GPC) with a high resolution column, wherein the combined acid moieties of the high copolymer and the low copolymer are at least partially neutralized with cations.

The term "melt index" or "MI" refers to melt index as determined according to ASTM D1238 at 190°C using a 2160 g weight, with values of MI reported in g/10 minutes, unless otherwise specified.

The term "(meth)acrylic acid," and the abbreviation "(M)AA," refers to methacrylic acid and/or acrylic acid and "(meth)acrylate" and "alkyl (meth)acrylate" refer to alkyl esters of methacrylic acid and/or acrylic acid.

As used herein, the term "inner layer" refers to any layer of a multilayer structure whose principal surfaces are both directly adhered to other layers of the structure. The terms "outer layer", "face layer", "skin layer" and "surface layer" are used interchangeably herein to refer to any layer of a multilayer structure having only one of its principal surfaces directly adhered to another layer of the structure. All multilayer structures have two, and only two, outer layers, each of which has a principal surface adhered to only one other layer of the multilayer structure.

The term "inside layer" refers to a face layer of a multilayer structure or package that is closest to the contents of the structure or package relative to the other layers of the multilayer structure. "Inside layer" also refers to the innermost layer of a plurality of concentrically arranged layers simultaneously coextruded through a profile or annular die. For example, the term "inside layer" is used in reference to the layer that forms the surface of the inside of a container. The term "outside layer" refers to the face layer of a multilayer structure or package that is farthest from the contents relative to the other layers of the multilayer structure or package. "Outside layer" also refers to the outermost layer of a plurality of concentrically arranged layers simultaneously coextruded through a profile or annular die. For example, the term "outside layer" is used in reference to the layer that forms the surface of the outside of a container.

All layers of the multilayered films, sheets and structures described herein are adhered to each other, directly or indirectly, unless otherwise specified in limited circumstances. "Directly adhered", in reference to layers, signifies that the subject layer is adhered to the object layer without an intervening tie layer, adhesive layer or other layer. "Adhered through an intervening layer" means that at least one layer, such as a tie layer or an adhesive layer, is positioned between the subject layer and the object layer.

As used herein with respect to layers of multilayered films, sheets and structures, the word "between", for example in reference to a subject layer described as being between two other specified layers, may signify the direct adhesion of the subject layer to one or both of the two other specified layers or it may signify that the subject layer is adhered to one or both of the specified layers through one or more intervening layers. In other contexts, the term "between" retains its conventional meaning, unless otherwise specified.

The bimodal ionomer composition described herein is highly useful as a coating composition for preparing scratch resistant, decorative, wearproof fabrics, etc. By proper selection of the components and neutralizing counterions, the thermoplastic bimodal ionomer composition provides enhanced scratch resistance, abrasion resistance, wear resistance or scuff resistance. The bimodal ionomer composition may also demonstrate one or more of high flexibility, soft touch and warm feel, strong bond strength to substrate fabrics or papers, high frequency (HF) weldability, transparency (low haze), gloss, printability, colorability, and improved melt processibility. It offers a combination of properties that, when combined with fabrics, papers, or other substrates, may enable superior performance capabilities unattainable by common halogen-free ethylene copolymers.

The bimodal ionomer composition may be used in applications where other ethylene copolymers and conventional lonomers demonstrate poor wear resistance, poor HF weldability or poor flexibility. For example, the bimodal ionomer composition may be used to replace plasticized PVC and flexible thermoplastic urethanes (TPU). It may also demonstrate improved adhesion and compatibility with other polar and non-polar polymers, fillers and additives. Bimodal ionomers may also achieve performance improvement over conventional ionomers in heat stability, as measured by the resistance to deformation at elevated temperature and under stress. Bimodal ionomers may also exhibit reduced embrittlement on aging compared to conventional ionomers.

### High copolymers

The high copolymer component of the bimodal ionomer is preferably a 'direct' acid copolymer (as opposed to grafted copolymers) having an Mw of 80,000 to 500,000 Da. Also preferably, it has a polydispersity (Mw/Mn) of 1 to 15, more preferably 1 to 10.

It is preferably an α-olefin, particularly ethylene, α,β-ethylenically unsaturated carboxylic acid, particularly acrylic and methacrylic acid, copolymer, optionally containing a third, softening monomer. "Softening" means that the polymer is made less crystalline.

The copolymers used as the high copolymer may be described as E/X/Y copolymers where E represents copolymerized units of ethylene, X represents copolymerized units of a C₃₋₈ α,β-ethytenically unsaturated carboxylic acid, and Y represents copolymerized units of a softening comonomer selected from alkyl acrylate and alkyl methacrylate, wherein the alkyl groups have from 1 to 8 carbon atoms, and vinyl acetate.

X is present in 2 to 30 (or 2 to 20, preferably 5 to 25, more preferably 8 to 20) weight % of the F/X/Y polymer, and Y is present in from 0 to 45 weight % of the E/X/Y polymer.

Of note are high copolymers wherein Y is 0% of the high copolymer (that is, an E/X dipolymer, including without limitation, ethylene/acrylic acid and ethylene/methacrylic acid dipolymers).

Also of note are E/X/Y terpolymers wherein X is present in 2 to 20 (preferably 5 to 25, more preferably 8 to 20) weight % of the polymer, and Y is present in a finite amount up to 45 (such as from a lower limit of 3, preferably 10, to an upper limit of 25, 30 or 45) weight % of the polymer. Suitable terpolymers include without limitation ethylene/acrylic acid/methyl acrylate, ethylene/acrylic acid/ethyl acrylate, ethylene/acrylic acid/n-butyl acrylate, ethylene/acrylic acid/iso-butyl acrylate, ethylene/methacrylic acid/methyl acrylate, ethylene/methacrylic acid/ethyl acrylate, ethylene/methacrylic acid/n-butyl acrylate, ethylene/methacrylic acid/isobutyl acrylate, and ethylene/acrylic acid/vinyl acetate terpolymers.

The high polymers preferably have melt indices (MI) from 0.1 to 600, or from 25 to 300, or from 60 to 250 g/10 min.

Methods of preparing ethylene acid copolymers are known. Ethylene acid copolymers with high levels of acid (X) may be prepared in continuous polymerizers by use of "co-solvent technology" as described in U.S. Patent No. 5,028,674 or by employing somewhat higher pressures than those at which copolymers with lower acid are prepared.

Examples of suitable high copolymers and their molecular weights are shown in Table A. "E" stands for copolymerized ethylene, "MAA" stands for copolymerized methacrylic acid, "AA" stands for copolymerized acrylic acid and "nBA" stands for copolymerized n-butyl acrylate, and the numbers indicate the weight % of the copolymerized comonomer present in the copolymer. "NA" means not available.

**Table A**

| | Polymer Composition | MI | Mn (10³) | Mw (10³) | Polydispersity (Mw/Mn) |
|---|---|---|---|---|---|
| HC-1 | E/9MAA/23.5nBA | 25 | 26.6 | 176.5 | 6.6 |
| HC-2 | E/8.3AA/17Nba | NA | NA | NA | NA |
| HC-3 | E/6.2AA/28nBA | 200 | NA | NA | NA |
| HC-4 | E/10.5AA/15.5nBA | 60 | NA | NA | NA |
| HC-5 | E/8.5AA/15.5nBA | 60 | NA | NA | NA |
| HC-6 | E/10MAA/17nBA | 25 | NA | NA | NA |
| HC-7 | E/15AA/35nBA | 200 | NA | NA | NA |
| HC-8 | E/15MAA | 60 | 17.6 | 112.4 | 6.4 |
| HC-9 | E/4MAA | 3 | 31.7 | 365.5 | 11.5 |
| HC-10 | E/5.8AA | 1.5 | 31.5 | 162.1 | 5.1 |
| HC-11 | E/9AA | 10 | 24.3 | 186.4 | 7.7 |
| HC-12 | E/10MAA | 500 | 16.0 | 84.0 | 5.3 |
| HC-13 | E/10MAA | 35 | 19.6 | 160.8 | 8.2 |
| HC-14 | E/19MAA | 60 | NA | NA | NA |
| HC-15 | E/11MAA | 95 | NA | NA | NA |

### Low copolymers

The low copolymers are preferably 'direct' acid copolymers having a molecular weight (Mw) of 2,000 to 30,000 Da. Preferably they have polydispersities (Mw/Mn) of 1 to 10, more preferably 1 to 6. They are preferably α-olefin, particularly ethylene, C₃₋₈ α,β-ethylenically unsaturated carboxylic acid, particularly acrylic and methacrylic acid, copolymers. Preferably the acid moiety in these copolymers is 3 to 30 (or 5 to 20, or 3 to 15, most preferably 5 to 10) weight % of the copolymer.

These low copolymers also may be referred to as acid copolymer waxes. Suitable examples are commercially available from Honeywell Specialty Wax and Additives of Morristown, NJ (e.g., AC 540, believed to be an ethylene/5 weight % acrylic acid copolymer with a number average molecular weight of 4369, and others indicated in Table B with their molecular weights).

Because of their relatively low molecular weight, these low polymers are too low in viscosity at elevated temperatures to have a meaningful or measurable melt index. Instead, their Mw is determined by correlation to their Brookfield viscosity. This technique for measuring viscosity of fluids is outlined in, for example, ASTM D2196, D2983 or D3236-1978. The Brookfield viscosity is reported in centipoise and the value is determined by the spindle speed or shear rate at which the Brookfield Viscometer is operated. Brookfield Viscosity data (measured at 140 °C) was provided by Honeywell or by its predecessor, the Allied Signal Corporation.

**Table B**

| | Trade Designation | Composition | Brookfield Viscosity (Pa·s(cps)) | Mn (10³) | Mw (10³) | Polydispersity (Mw/Mn) |
|---|---|---|---|---|---|---|
| LC-1 | AC143 | E/17AA | NA | NA | 2.04 | NA |
| LC-2 | AC540 | E/5AA | 0.575 (575) | 4.3 | 7.5 | 1.7 |
| LC-3 | AC580 | E/10AA | 0.650 (650) | 4.8 | 26.0 | 5.4 |
| LC-4 | AC5120 | E/15AA | 0.650 (650) | 3.0 | 5.2 | 1.7 |

### Ionomers

lonomers are acid copolymers wherein at least some of the carboxylic acid groups in the copolymer are neutralized to form the corresponding carboxylate salts. Ionomers may be prepared from the high and low acid copolymers described above, wherein the carboxylic acid groups present are at least partially neutralized by basic compounds to from salts comprising alkali metal ions, transition metal ions, alkaline earth ions or combinations of cations. Methods for preparing ionomers are disclosed in U.S. Patent 3,264,272, for example.

Compounds suitable for neutralizing an acid copolymer include ionic compounds having basic anions and alkali metal cations (for example, lithium or sodium or potassium ions), transition metal cations (for example, zinc ions) or alkaline earth metal cations (for example magnesium or calcium ions) and mixtures or combinations of such cations. Ionic compounds that may be used for neutralizing the ethylene acid copolymers include alkali metal formates, acetates, nitrates, carbonates, hydrogen carbonates, oxides, hydroxides or alkoxides. Other useful ionic compounds include alkaline earth metal formates, acetates, nitrates, oxides, hydroxides or alkoxides of alkaline earth metals. Transition metal formates, acetates, nitrates, carbonates, hydrogen carbonates, oxides, hydroxides or alkoxides may also be used. The amount of compound capable of neutralizing acidic groups may be determined by adding the amount of the compound that is stoichiometrically calculated to neutralize a target amount of acid moieties in the acid copolymer (herein referred to as "% nominal neutralization" or "nominally neutralized"). Thus, sufficient basic compound is made available in the blend so that, in aggregate, the indicated level of nominal neutralization could be achieved.

Ionomers of the high copolymers and of the low copolymers when made separately may be made by methods described above. The degree of neutralization and the acid level preferably are such that the resulting ionomers of the high copolymers and the ionomers of the low copolymers are melt processible. Examples of suitable ionomers prepared from high copolymers include those set forth in Table C.

**Table C**

| Ionomer | Acid copolymer | Nominal Neutralization (%) | Cation | MI |
|---|---|---|---|---|
| I-1 | HC-1 | 51 | Mg | 1.1 |
| I-2 | E/19MAA | 37 | Na | 2.6 |
| I-3 | E/15MAA | 58 | Zn | 0.7 |
| I-4 | E/15MAA | 56 | Mg | 0.75 |
| I-5 | HC-10 | 37 | Na | 10 |
| I-6 | HC-10 | 57 | Zn | 5.2 |
| I-7 | HC-3 | 53 | Zn | 5.0 |
| I-8 | HC-3 | 51 | Na | 4.5 |
| I-9 | E/15MAA | 52 | Zn | 4.2 |
| I-10 | E/11MAA | 58 | Zn | 5.3 |
| I-11 | E/15MAA | 51 | Na | 4.5 |

Preferably the Mw of the high copolymers is separated from the Mw of the low copolymers sufficiently that the peaks for the high copolymers are distinctly separated from the peaks for the low copolymers when the molecular weight distribution of the mixture is determined by gel permeation chromatography (GPC) with a high resolution column. Preferably, high copolymers with lower Mw are blended with low copolymers with lower Mw (e.g. high copolymers with Mw of 80,000 Da with low copolymers with Mw of 2,000 Da). This preference becomes less important as the Mw of the high copolymer increases.

Preferably, the high copolymer(s) are present in about 40 to about 95 weight %, based on the combined total weight of the high copolymers and the low copolymers. Also preferably, the low copolymer(s) are present in the range of 5 to 60 weight %, or 5 to 50 weight %, or 5 to 25%, or 5 to 20%, based on the total weight of the high copolymers and the low copolymers.

At least 35% of the acid moieties in the high copolymers and low copolymers are neutralized to the carboxylate salts comprising one or more alkali metal, alkaline earth or transition metal cations.

The components of the bimodal ionomer composition may be combined by any suitable technique. For example, bimodal ionomer compositions may be made by melt blending the melt processible ionomers separately made and then optionally further neutralizing with basic compounds including the same or different cations to achieve the desired nominal neutralization of the resulting blend of ionomers. Preferably the non-neutralized high copolymers and low copolymers are melt-blended and neutralized *in situ* so that desired higher or full neutralization may be achieved in one step.

In either case, neutralization may be effected by reacting the high or low copolymers with basic compounds comprising alkali metal, alkaline earth metal or transition metal cations. Preferred cations include lithium*, sodium*, potassium*, magnesium*, calcium*, barium, lead, tin, or zinc* (* indicates a more preferred cation), or combinations of two or more of these cations. Preferably at least 20 equivalent %, at least 35 equivalent %, at least 50 equivalent %, or at least 75 equivalent % of the cations in the composition are zinc cations.

Preferably, the acid moieties of the high copolymers and low copolymers in the resulting bimodal ionomer are partially or fully neutralized to a level of 40 to 100%, or 40 to 85%, or 40 to 75 %, or 50 to 90 %, or 50 to 85%, or 50 to 75 % or 60 to 80%, based on the total number of acid moieties in the high and low copolymers.

The basic compound(s) may be added neat to the acid copolymer(s) or ionomer(s) thereof, or premixed with a polymeric material, such as an add copolymer, to form a "masterbatch" that may be added to the acid copolymers or ionomers thereof.

Of note are bimodal compositions comprising (1) a high copolymer component comprising an E/X/Y terpolymer, wherein X (e.g. methacrylic acid or acrylic acid) is from 5 to 20 weight % of the copolymer and Y (e.g. alkyl acrylate such as butyl acrylate) is from 10 to 45 weight % of the copolymer, and (2) the low copolymer; wherein 40 to 100% of the combined acid groups are neutralized to carboxylate salts with one or more alkali, alkaline earth, or transitional metal ions.

### Other thermoplastic polymers

Optionally, the bimodal ionomer composition may contain up to 200 parts by weight of one or more other thermoplastic polymers and/or up to 170 parts by weight of one or more fillers, based on 100 parts by weight of the blend of the high and low copolymers. For example, the composition may consist essentially of (a) the bimodal ionomer composition and (b) 1 to 60 weight % based on (a)+(b) of at least one other thermoplastic polymer.

The optional thermoplastic polymer component of the composition may be selected from other (conventional) ionomers, other ethylene copolymers, functionalized copolymers, polyesters, polyamides, copolyetheresters, copolyetheramides, elastomeric polyolefins, styrene diene block copolymers, polyvinyl chloride, and thermoplastic polyurethanes, these classes of polymers being well known in the art.

Ethylene copolymers include ethylene copolymerized with one or more polar comonomers selected from vinyl acetate, alkyl acrylate, alkyl methacrylate, carbon monoxide, acrylic acid, methacrylic acid or combinations thereof. Suitable ethylene copolymers include without limitation ethylene vinyl acetate copolymers, ethylene alkyl acrylate copolymers, ethylene alkyl methacrylate copolymers, ethylene acid copolymers, and ethylene acid ionomers.

Ethylene vinyl acetate (EVA) copolymers include EVA dipolymers, EVA terpolymers and higher order copolymers. "EVA dipolymers" describes copolymers consisting of only copolymerized units of ethylene and vinyl acetate. "EVA terpolymers" describes copolymers prepared by copolymerization of ethylene, vinyl acetate and an additional comonomer. Copolymerized vinyl acetate units are preferably from 5 to 35 weight %, more preferably 8 to 20 weight %, of the EVA copolymer. EVA copolymers include those available from E. I. du Pont de Nemours and Company of Wilmington, DE (hereinafter "DuPont") under the trademark ELVAX®.

Ethylene alkyl acrylate copolymers or ethylene alkyl methacrylate copolymers comprise copolymerized units of ethylene and alkyl acrylate or alkyl methacrylate, respectively. Preferably, the alkyl group contains one to six carbon atoms, more preferably one to four carbon atoms. Methyl acrylate, ethyl acrylate, isobutyl acrylate and n-butyl acrylate are preferred comonomers. The weight percentage of copolymerized units of alkyl acrylate or alkyl methacrylate comonomer present in these copolymers may vary broadly from a few weight % to as high as 40 weight % of the copolymer or even higher, preferably 5 to 35 weight %, more preferably 8 to 20 weight %, of the ethylene alkyl (meth)acrylate copolymer. Ethylene alkyl acrylate copolymers include those available from DuPont under the ELVALOY® AC trademark. Ethylene alkyl acrylate carbon monoxide terpolymers such as ethylene-n-butyl acrylate-carbon monoxide terpolymers may also be used.

As used herein, a functionalized polymer may be an ethylene copolymer comprising copolymerized units of ethylene and a comonomer selected from the group consisting of C₄-C₈ unsaturated anhydrides, monoesters of C₄-C₈ unsaturated acids having at least two carboxylic acid groups, diesters of C₄-C₈ unsaturated acids having at least two carboxylic acid groups and mixtures of such copolymers. The ethylene copolymer may comprise from 3 to 25 weight % of copolymerized units of the comonomer. These functionalized polymers are obtained by a process of high-pressure free radical random copolymerization, rather than graft copolymers. The monomer units are incorporated into the polymer backbone or chain and are not incorporated to an appreciable extent as pendant groups onto a previously formed polymer backbone. The copolymer may be a dipolymer or a higher order copolymer, such as a terpolymer or tetrapolymer and is preferably a random copolymer. Suitable comonomers of the ethylene copolymer include unsaturated anhydrides such as maleic anhydride and itaconic anhydride; C₁-C₂₀ alkyl monoesters of butenedioic acids (e.g. maleic acid, fumaric acid, itaconic acid and citraconic acid), including methyl hydrogen maleate, ethyl hydrogen maleate, propyl hydrogen fumarate, and 2-ethylhexyl hydrogen fumarate; C₁-C₂₀ alkyl diesters of butenedioic acids such as dimethyl maleate, diethyl maleate, dibutyl citraconate, dioctyl maleate, and di-2-ethylhexyl fumarate. Preferred comonomers include maleic anhydride and ethyl hydrogen maleate.

Anhydride-modified polymers are also suitable for use as a functionalized polymer and include anhydride-grafted homopolymers or copolymers. These include polymers that have been grafted with from 0.1 to 10 weight % of an unsaturated dicarboxylic acid anhydride. They may be grafted olefin polymers, for example grafted polyethylene, grafted EVA copolymers, grafted ethylene alkyl acrylate copolymers or grafted ethylene alkyl methacrylate copolymers. Suitable anhydride-modified polymers are disclosed in U.S. Patent Application No. 11/644,976.

Suitable ethylene acid copolymers are as described above with respect to high copolymers. Suitable other ionomers are also described at length above with respect to ionomers of the high copolymers. Suitable ethylene acid copolymers and ionomers are commercially available, including NUCREL® ethylene acid copolymers and SURLYN® ionomers, both available from DuPont.

Notable bimodal compositions include other ionomers as the additional thermoplastic resin, such as an ethylene (meth)acrylic acid copolymer wherein the (meth)acrylic acid is from 2 to 30 weight % of the polymer and about 40 to 100% of the acid moieties are neutralized to carboxylate salts comprising alkali metal, alkaline earth or transition metal cations. Bimodal ionomers may be mixed with up to 30 weight % of an additional ionomer and still retain properties characteristic of the bimodal ionomer (such as HF-weldability discussed below).

Polyester is well known in the art and may include any condensation polymerization products derived from an alcohol and a dicarboxylic acid (including esters thereof) by esterification or transesterification. Alcohols include glycols having 2 to 10 carbon atoms such as ethylene glycol, propylene glycol, butylene glycol, propanediol, methoxypolyalkylene glycol, neopentyl glycol, trimethylene glycol, tetramethylene glycol, hexamethylene glycol, diethylene glycol, polyethylene glycol, cyclohexane dimethanol, or combinations of two or more thereof. Dicarboxylic acids include terephthalic acid, succinic acid, adipic acid, azelaic acid, sebacic acid, glutaric acid, isophthalic acid, 1,10-decanedicarboxylic acid, phthalic acid, dodecanedioic acid, ester-forming equivalents (e.g., diesters such as dimethylphthalate), or combinations of two or more thereof. Polyesters include polyethylene terephthalate (PET), polytrimethylene terephthalate (PTT), polybutylene terephthalate (PBT), polyethylene naphthalenedioate (PEN), or combinations of two or more thereof. Polyester blends are preferably blends wherein polyethylene terephthalate, polypropylene terephthalate or polybutylene terephthalate are main components. Polyethylene terephthalate is particularly preferred.

Polyester also includes poly(hydroxyalkanoic acid) (PHA) compositions prepared from polymerization of hydroxyalkanoic acids having from 2 to 7 (or more) carbon atoms, including the polymer comprising 6-hydroxyhexanoic acid, also known as polycaprolactone (PCL), and polymers comprising 3-hydroxyhexanoic acid, 4-hydroxyhexanoic acid and 3-hydroxyheptanoic acid. PHA polymers comprising hydroxyalkanoic acids having five or fewer carbon atoms include polymers comprising glycolic acid, lactic acid, 3-hydroxypropionate, 2-hydroxybutyrate, 3-hydroxybutyrate, 4-hydroxybutyrate, 3-hydroxyvalerate, 4-hydroxyvalerate and 5-hydroxyvalerate, such as poly(glycolic acid) (PGA), poly(lactic acid) (PLA) and poly(hydroxybutyrate) (PHB). PHA compositions also include blends of two or more PHA polymers, such as a blend of PHB and PCL. Because polyester and processes for making polyester are well known in the art, the description of these is omitted herein in the interest of brevity. The term "polyester" as used herein refers generically to any or all of the polymers described above.

Polyamides (e.g. nylon) suitable for use may be prepared by polymerization of lactams or amino acids (e.g. nylon 6 or nylon 11), or by condensation of diamines such as hexamethylene diamine with dibasic acids such as succinic, adipic, or sebacic acid. Polyamides may also include copolymerized units of additional comonomers to form terpolymers or higher order polymers. Polyamides include nylon 6, nylon 9, nylon 10, nylon 11, nylon 12, nylon 6,6, nylon 6,10, nylon 6,12, nylon 61, nylon 6T, nylon 6.9, nylon 12,12, copolymers thereof and blends of amorphous and semicrystalline polyamides. As used herein the term polyamide also includes polyamide nano-composites such as those available commercially under the tradename AEGIS polyamides from Honeywell International Inc. or IMPERM polyamide (nylon MXD6) from Mitsubishi Gas Chemical Company. Preferred polyamides include polyepsiloncaprolactam (nylon 6); polyhexamethylene adipamide (nylon 6,6); nylon 11; nylon 12, nylon 12,12 and copolymers and terpolymers such as nylon 6/6,6; nylon 6,10; nylon 6,12; nylon 6,6/12; nylon 6/6, and nylon 6/6T. More preferred polyamides are polyepsiloncaprolactam (nylon 6), polyhexamethylene adipamide (nylon 6,6), and most preferred is nylon 6.

Copolyetheresters are discussed in U.S. Patents 3,651,014; 3,766,146; and 3,763,109. They comprise a multiplicity of recurring long chain units and short chain units joined head-to-tail through ester linkages, the long chain units being represented by the formula 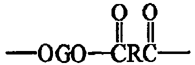 and the short chain units being represented by the formula 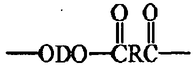 where G is a divalent radical remaining after the removal of terminal hydroxyl groups from a poly (alkylene oxide) glycol having a molecular weight of 400-6,000 and a carbon to oxygen ratio of 2.0-4.3; R is a divalent radical remaining after removal of carboxyl groups from a dicarboxylic acid having a molecular weight less than 300; and D is a divalent radical remaining after removal of hydroxyl groups from a diol having a molecular weight less than 250; provided said short chain ester units amount to 15-95 percent by weight of said copolyetherester. Preferred copolyetherester polymers are those where the polyether segment is obtained by polymerization of tetrahydrofuran and the polyester segment is obtained by polymerization of tetramethylene glycol and phthalic acid. The more polyether units incorporated into the copolyetherester, the softer the polymer. The molar ether:ester ratio may vary from 90:10 to 10:90, preferably 80:20 to 60:40; and the shore D hardness may be less than 70, preferably less than 40.

Copolyetheramides are well known, as described in U.S. Patent 4,331,786. They comprise a linear and regular chain of rigid polyamide segments and flexible polyether segments represented by the general formula 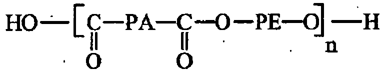 wherein PA is a linear saturated aliphatic polyamide sequence formed from a lactam or amino acid having a hydrocarbon chain containing 4 to 14 carbon atoms or from an aliphatic C₆-C₉ diamine, in the presence of a chain-limiting aliphatic carboxylic diacid having 4-20 carbon atoms; said polyamide having an average molecular weight between 300 and 15,000; and PE is a polyoxyalkylene sequence formed from linear or branched aliphatic polyoxyalkylene glycols, mixtures thereof or copolyethers derived therefrom said polyoxyalkylene glycols having a molecular weight of less than or equal to 6,000 and n indicates a sufficient number of repeating units so that said polyetheramide copolymer has an intrinsic viscosity of from 0.8 to 2.05. The preparation of these polyetheramides comprises the step of reacting a dicarboxylic polyamide, the COOH groups of which are located at the chain ends, with a polyoxyalkylene glycol hydroxylated at the chain ends, in the presence of a catalyst such as a tetra-alkyl ortho-titanate having the general formula Ti(OR)₄, wherein R is a linear branched aliphatic hydrocarbon radical having 1 to 24 carbon atoms. Again, the more polyether units incorporated into the copolyetheramide, the softer the polymer. The ether:amide ratios are as described above for the ether:ester ratios, as is shore D hardness.

Elastomeric polyolefins are polymers comprising ethylene and higher primary olefins such as propylene, hexene, octene and optionally 1,4-hexadiene and or ethylidene norbornene or norbornadiene. The elastomeric polyolefins may be functionalized by grafting with maleic anhydride.

Thermoplastic polyurethanes are linear or slightly chain-branched polymers consisting of hard blocks and soft elastomeric blocks. They are produced by reacting soft hydroxy terminated elastomeric polyethers or polyesters with diisocyanates such as methylene diisocyanate (MDI) or toluene diisocyanate (TDI). These polymers may be chain extended with glycols, diamines, diacids, or amino alcohols. The reaction products of the isocyanates and the alcohols are called urethanes and these blocks are relatively hard and high-melting. These hard, high-melting blocks are responsible for the thermoplastic nature of the polyurethanes.

Block styrene diene copolymers comprise polystyrene units and polydiene units derived from polybutadiene, polyisoprene units or copolymers of these two. In the case of the copolymer it is possible to hydrogenate the polyolefin to give saturated rubbery backbone segments. These materials are usually referred to as SBS, SIS or SEBS thermoplastic elastomers. They may also be functionalized with maleic anhydride, either by grafting or by copolymerization.

### Fillers

One or more fillers may be included in the bimodal composition to provide any of the benefits associated with fillers. For example, the optional filler component may be selected to impart additional density to the bimodal ionomer compositions or to their blends with other materials. Preferred densities depend on the application. The filler may be inorganic having a density greater than 4 gm/cc, preferably greater than 5 gm/cc, and present in amounts between 0 and 60 weight % based on the total weight of the composition. Useful fillers include TiO₂, zinc oxide, barium sulfate, lead silicate and tungsten carbide, tin oxide, as well as the other well known corresponding salts and oxides thereof. Fillers are preferably non-reactive or almost non-reactive with the ionomers described above when they are less than completely neutralized. Filler may not be suitable when transparency of the bimodal ionomer composition is desired.

### Other Components

The compositions may further comprise small amounts of optional materials commonly used and well known in the polymer art. Such materials include conventional additives used in polymeric materials including plasticizers, stabilizers including viscosity stabilizers and hydrolytic stabilizers, primary and secondary antioxidants such as for example IRGANOX 1010, ultraviolet ray absorbers and stabilizers, antistatic agents, dyes, pigments or other coloring agents, fire-retardants, lubricants, processing aids, slip additives, antiblock agents such as silica or talc, release agents, and/or mixtures thereof. Other optional additives include inorganic fillers as described above; TiO₂, which is used as a pigment or as a whitening agent; optical brighteners; surfactants; and other components known in the polymer art. Many such additives are described in the Kirk Othmer Encyclopedia of Chemical Technology, 5th edition, John Wiley & Sons (Hoboken, 2005).

These conventional ingredients may be present in the compositions in quantities that are generally from 0.01 to 15 weight %, preferably from 0.01 to 5 weight % or 0.01 to 10 weight % of the total composition, so long as they do not detract from the basic and novel characteristics of the composition and do not significantly adversely affect the performance of the composition prepared from the composition

The optional incorporation of such conventional ingredients into the compositions may be carried out by any known process, for example, by dry blending, by extruding a mixture of the various constituents, by the conventional masterbatch technique, or the like. See, again, the *Kirk Othmer Encyclopedia.*

### Articles Comprising the Bimodal Ionomer Composition

Films may be prepared as multilayer films, provided that at least one surface of the film comprises the bimodal ionomer composition. The films may be prepared by (co)extrusion to make cast or blown films according to well known procedures. Sheets are similar to films but are considered thicker than films. For convenience the following description refers to films, but it should be understood that the description also applies to sheets.

If it is desired that the scratch resistance properties of the bimodal ionomer composition be limited to one side of a film, for instance the inside of a package, the bimodal ionomer composition may be coextruded, extrusion coated, solution coated, or laminated to prepare a multilayer film comprising a surface layer comprising or consisting essentially of the bimodal ionomer composition with one or more other polymer layers. Techniques for preparing multilayer films are well known in the art.

For example, the film may have a structural or bulking layer, adhesive layer and/or heat seal layer. In some cases, a single layer may function as both the heat seal layer and the structural layer. Preferably, multilayer films comprise a surface layer of the bimodal ionomer. When present, structural or bulking layers provide strength, body and/or thickness to the multilayer film, allowing for the use of the bimodal ionomer in a thin skin or surface layer. An adhesive layer facilitates bonding between two layers of a multilayer structure or between the film and a substrate. Adhesive layers are useful for bonding materials to the bimodal ionomer films while desirably preserving an exposed bimodal ionomer layer. A heat seal layer comprises a sealant composition that is capable of bonding (sealing) to itself or a substrate at temperatures substantially below the melting temperature of an outside layer, i.e. a layer that comes into contact with a heated sealing means (for example, the jaws of a sealing bar) during the sealing process, so that the appearance of the outside layer will not be affected by the sealing process and the polymer will not stick to the sealing means. In multilayer structures, the outside layer may comprise a bimodal ionomer composition.

The additional layer(s) of multilayer films or structures may comprise, for example and without limitation, polyvinyl chloride, thermoplastic urethanes, polyethylene homopolymers, polyethylene copolymers, polypropylene homopolymers, polypropylene copolymers, ethylene copolymerized with polar comonomers including ethylene vinyl acetate copolymers, ethylene alkyl acrylate copolymers, ethylene alkyl methacrylate copolymers, ethylene acid copolymers, ethylene acid ionomers, functionalized copolymers including anhydride-modified polymers and copolymers comprising copolymerized units of ethylene and a comonomer selected from the group consisting of C₄-C₈ unsaturated acids having at least two carboxylic acid groups, and cyclic anhydrides, monoesters and diesters of such acids, polyesters, polyamides, and combinations or blends of two or more of any of these polymers. Adhesive layers may also be low molecular weight thermoplastic adhesives such as copolyester, copolyamide or polyurethane, for example. Additionally, the bimodal ionomer films may contain liquid applied emulsions or dispersions, which may be aqueous or solvent-borne, thermoplastic or thermosetting.

Suitable polyethylenes include polyethylene homopolymers and copolymers of ethylene and α-olefins, such as linear low density polyethylenes, and homopolymers or copolymers of ethylene and α-olefin monomers prepared in the presence of metallocene catalysts, single site catalysts and constrained geometry catalysts (hereinafter metallocene polyethylenes, or mPE).

Metallocene catalyzed polymerization includes polymerization processes that involve the use of metallocene catalysts as well as those processes that involve use of constrained geometry and single-site catalysts. Polymerization may be conducted as a solution-phase process, a gas phase-process or the like. Metallocene technology is described in U.S. Patent Nos. 5,272,236; 5,278,272; 5,507,475; 5,264,405 and 5,240,894.

In some instances blends of polymers, especially blends of ethylene copolymers, may be useful as components of adhesive or heat seal layers. For example, adhesive compositions described in U.S. Patent Nos. 6,545,091; 5,217,812; 5,053,457; 6,166,142; 6,210,765 and US Patent Application No. 11/644,976 may be used.

The additional layer(s) may additionally comprise conventional additives used in quantities that do not detract from the ability of the multilayer film to function as a wear-resistant surface. Examples of these conventional additives are described above. Optional additives, when used as components of the additional layers, may be present in various quantities, for example, in amounts up to 20 weight % of the total weight of the composition for the layer.

A film may be further oriented beyond the immediate quenching or casting of the film. The process comprises the steps of (co)extruding a flow of molten polymer (or multilayer laminar flow of molten polymers), quenching the (co)extrudate and orienting the quenched (co)extrudate in at least one direction. Orientation may be accomplished by stretching or tentering, with or without the application of heat, for example.

The bimodal ionomer compositions may be converted and applied to a substrate by a variety of techniques and processes. Substrates of interest include thermoplastic films and sheets; cellular foams (having open or closed cells, or a combination of open and closed cells, and comprising one or more materials such as polyurethane, polystyrene, polyvinyl chloride and polyolefin); woven, knitted and non-woven fabrics; paper, pulp and paperboard products; wood and wood products; metal (aluminum, copper, iron, steel, etc.); glass (sheet glass, glass fiber, glass fiber batt, etc.); stones; ceramics; and leather and leather-like products (including "artificial leather"). The fabric substrates may be woven, knitted or non-woven fabrics comprising polyethylene, polypropylene, polyester, polyamide, LYCRA (available from Invista Corp. of Wichita, KS), KEVLAR® fibers (available from DuPont), wool, cotton, silk, cellulosics, etc. and blends of two or more of these materials. Substrates such as paper, wood, metal, glass, stone, ceramic, and leather may also comprise a finish surface by treatments such as polishing, texturizing, coating, painting, varnishing, printing, application of anticorrosion agents and the like. Thermoplastic resins or thermoset resins, particularly when not in full spherical shape or when not fully covered by the bimodal ionomer composition may also be used as substrates.

Films described above may be applied to substrates by methods including, without limitation, extrusion lamination, coextrusion lamination, calendering lamination, adhesive-aided lamination, thermal lamination, sealing, or welding using thermal processes such as hot roll lamination, flame lamination, and heat sealing.

For example, a film comprising the bimodal ionomer may be laminated to a substrate web by means of an inner layer composition applied in molten form to adhere the film to the substrate through the inner layer composition. One process for fabricating this structure involves laying down a molten curtain of the inner layer composition, formed by extruding the inner layer composition through a flat die, between the film and the substrate moving at high speeds as they come into contact with a cold (chill) roll.

In some applications, a bimodal ionomer composition may be coated onto a substrate using methods known in the art, including, for example, extrusion coating, curtain extrusion, and coextrusion coating. Extrusion coating may be done as follows: dried granulates of the blend (and granulates of compositions for other layers, if present) are melted in single screw extruder(s). The molten polymer(s) are passed through a flat die to form a molten polymer curtain wherein the compositions of the individual layers are present in a laminar flow. The molten curtain drops onto the moving substrate to be immediately pressed onto the substrate and quenched by a quench drum. Bimodal ionomers have strong bonds to nonwoven fabric substrates.

Of note is coextrusion coating, wherein at least one additional layer is positioned between the bimodal ionomer composition and the substrate. A composition comprising 10 to 30 weight % of an ethylene copolymer with 9 weight % of ethyl hydrogen maleate and 70 to 90 weight % of an ethylene copolymer with 20 weight % of methyl acrylate is useful for adhering a bimodal ionomer layer to a fabric substrate, either by extrusion lamination or by coextrusion coating.

A bimodal ionomer composition may also be prepared as a powder. The powder particles may have granular sizes up to 600, up to 400, or up to 200 microns. A powder composition may comprise granules that vary in size from 100 to 600 microns, or from 150 to 200 microns. The compositions may be milled, pulverized or otherwise processed by known methods to provide a particle size suitable for application to a substrate.

The powder may be applied to a substrate by a technique such as powder scattering, wherein the powder is evenly distributed across a working width of a substrate and thereafter melted, smoothed, and cooled to provide a uniform coating of the composition on the substrate. Such a process may be suitable for use in the automobile industry for carpet backing, to prepare conveyor belts, interlinings, medical textiles, and in other clothing applications.

The powder may also be used in powder dot processes wherein the powder is placed in cavities of a heated engraved roller and transferrer to a preheated substrate in a pattern, sintered in an infra-red channel, and calendered in a smoothing unit. Powder dot processes may be used to prepare interlinings for lightweight outerwear, and fixing materials for shirt collars, shoe insoles, outerwear and other clothing applications.

A powder composition may be used in paste dot applications for light and temperature sensitive substrates. A dispersion of the powder may be applied in a pattern of dots to a substrate by a rotating printing screen and the dots dried using a hot air nozzle dryer.

The bimodal ionomer coating composition may also be applied to a substrate by aqueous dispersion coating.

These methods may be useful in preparing materials suitable for HF-welding applications, wherein the bimodal ionomer is used to adhere materials together. Good high frequency (HF) or radio frequency (RF) weldability is another desirable property for decorative films and coating compositions. Flexible polyvinyl chloride (f-PVC) has been used in HF-active films due to its HF sealing capability, vapor and gas barrier properties, and flexibility. High frequency welding is an alternative to stitching and heat-bonding methods for adhering an article to another article, such as a film to a substrate, a film to itself, to another film, or to a textile fabric. HF welding involves heating only a HF-active component or HF-active layer of a structure such as a multilayer film sufficiently to soften or melt that component. The selective heating is accomplished by treatment with a field of high frequency electromagnetic radiation. In contrast, heat-bonding methods require transferring heat through an entire structure to soften or melt a bonding layer or component in the structure. In either case, the softened or melted layer or component subsequently bonds the film structure to another structure or a substrate after it hardens.

HF welding may be advantageous over heat-bonding methods. HF welding may bond a film in a fraction of the time required for heat-bonding methods and is less likely to degrade thermally sensitive material, such as oriented films and thermally sensitive dyes. Also, HF welding minimizes structural deformation due to heat, allowing bonding of complex shapes. Some bimodal ionomer compositions are particularly well suited for preparing high frequency (HF) weldable films, multilayer structures, or articles. High frequency welding is useful in flexible packaging, flexible bag production, textile lamination, and in producing automotive components such as headliners and sun visors. HF-active films and articles are weldable to themselves or other substrates using a HF process that incorporates a HF welder, preferably a radio-frequency (RF) welder. HF welders include RF welders and microwave welders. Commercially available HF welders include those available from Callanan Company (Alloyd RF Sealing Systems), Weldan, Colpitt, Kiefel Technologies, Thermatron, and Radyne. RF welders may operate at frequencies of 27.12 MHz, 13.56 MHz, or 40.68 MHz. Microwave welders may also be suitable for welding or sealing bimodal ionomer films and may operate at frequencies of 2.45 gigahertz (GHz), 5.87 GHz, or 24.12 GHz. HF welding of bimodal ionomer films may involve operating a HF sealing apparatus with a die or tooling temperature set at 23 °C or higher. Increasing the die or tooling temperature may improve HF activation of the HF-active polymer composition, thereby reducing seal time. Die or tooling temperatures may be 40 °C or higher, even 60 °C or higher, but desirably lower than 120 °C for HF welding bimodal ionomer films. Die or tooling temperatures higher than the weight-average melt temperature of a film usually heat-seal or melt-weld the film to a substrate and may be higher than is necessary for HF welding.

HF-active films may be of any gauge, for example from 1 to 100 mils (25 to 2500 micrometers (µm)), preferably from 5 to 50 mils (125 to 1000 µm). The HF-active films preferably exhibit tensile strength in the machine direction (MD) and transverse direction (TD) of greater than 2,000 psi (14 MPa), ultimate elongations of greater than 400%, and 2% secant modulus values of 4,000 psi (28 MPa) to 30,000 psi (207 MPa) when tested according to ASTM method D-882. More preferably, the HF-active films further exhibit MD and TD Elmendorf tear strengths greater than 200 grams/mil (8 grams/µm) when tested according to ASTM method D-1922. Films with the aforementioned properties are sufficiently durable for subsequent conversion operations such as thermal lamination and HF-welding and for end use applications such as medical bags, textile laminates, and automotive interior laminates.

A combination of a thermal process with a HF process is also feasible. For example, thermally laminating a film as described herein to a substrate such as a fabric forms a film/fabric composite. HF-welding two such film/fabric composites together at a film/film interface (or folding the same film/fabric composite back on itself to form a film/film interface) provides a fabric/film/fabric multilayer structure.

Also provided is a HF-weldable multilayer film comprising an exposed HF-active bimodal ionomer layer and a HF-inactive layer. Multilayer films may have "AB", or "ABA" structures, wherein "A" corresponds to a bimodal ionomer HF-active layer and "B" corresponds to a HF-inactive or weakly HF-active layer. "ABC"-type structures are also suitable, wherein "C" is an HF-inactive or weakly active layer that is different from "B". Any number of different or repeated layers is conceivable, provided that at least one layer, preferably at least one exposed layer, is a bimodal ionomer layer.

HF-active films and articles have many uses. For example, layering two sheets of HF-active film, or folding the same HF-active film onto itself and HF-sealing around a perimeter of the sheet(s) forms a bag or a pouch. Such bags may be suitable for medical applications such as fluid delivery bags or liquid waste collection bags, liquid containment, gel packages such as for hot packs and colds packs, and beverage containment pouches.

A useful application is for manufacturing designs capable of being laminated onto clothing or footwear. Bimodal ionomer films exhibit desirable temperature resistance, water and detergent resistance, flexibility, elasticity, and adhesion to fabrics and textiles, making them well suited for clothing applications such as adhesive interlinings, stitched seam taping or water-resistant coatings.

HF-active films may be flocked films, having short fibers adhered to a surface of the HF-active film. For example, HF-active flocked films may contain a liquid adhesive disposed on a surface of an HF-active film with flocking fiber disposed on a surface of the adhesive remote from the HF-active film. Drying or curing the adhesive bonds the flocking fiber to the HF-active film. Suitable flocking fibers include polyester, nylon, rayon, or other natural or synthetic fibers that may be about 0.5 mm or greater in length. Suitable liquid adhesives include aqueous and solvent-borne thermoplastic or thermosetting adhesives. Such adhesives often are based on acrylic, urethane, epoxy, or polyvinyl acetate chemistry. Desirably, flocked films contain flocking on one surface and an HF-active bimodal ionomer layer on an opposing surface. HF-welding may adhere the flocked film to a woven or non-woven substrate, such as a garment. A particularly useful application for HF-active flocked films is preparing athletic apparel or decorative clothing with flocked film designs HF-welded thereon. Flocked films generally have a felt-like or velour-like feel on the flocked surface.

HF-active films having a weight-average melt temperature of greater than 100 °C are particularly well suited for high temperature applications including automotive interior lamination, especially to woven or nonwoven textiles. An automotive sun visor, for example, may comprise an HF-active film thermally laminated to a fabric to form a film/fabric composition, with the film/fabric composition HF welded around a rigid core. Additionally, film/fabric laminates containing the films may be fabricated into headliner structures, door panels, seating covers, and carpet mats.

The bimodal ionomer compositions may serve as halogen-free replacements for PVC or TPU. The bimodal ionomer compositions are suitable for decorative films for, for example, athletic shoe applications. Another use of the bimodal ionomer compositions is as a replacement for plasticized or flexible PVC in coated fabric applications. Compared to PVC and TPU, the bimodal ionomer composition has significantly less yellowing over time.

Films and laminate structures comprising the bimodal ionomer composition may be used in a wide variety of packaging for consumer goods. They may be used as wraps, package liners, package inserts, lidding and tapes, and formed into bags, pouches and other fabricated structures.

A film comprising the bimodal ionomer composition may be laminated to a substrate such as foil, paper, paperboard or nonwoven fibrous material to provide a packaging material. The film may be laminated to the substrate so that a face comprising the bimodal ionomer composition remains as a face layer on the packaging material. The packaging material may also be processed further by, for example, printing, embossing, and/or coloring to provide a packaging material to provide information to the consumer about the product therein and/or to provide a pleasing appearance of the package.

The bimodal ionomer composition may be useful as an inside layer for protecting the inside of containers from scratches from abrasive products such as food chips, cookies, powders and granules. For example, the bimodal ionomer composition may be applied to the inside of a "composite can," i.e. a cardboard tube with at least one fitted closed end and optionally an openable, resealable fitted end. Such composite cans are used to package food items such as potato and corn chips. Films with a surface layer comprising the bimodal ionomer composition may be fabricated into packages such as pouches, bags, and the like so that the bimodal ionomer layer is an inside layer of the package.

In other cases, the bimodal ionomer composition may be used as the outside layer of a package to protect the outside surface of the package from scratches due to handling and to provide a soft feel for the package. For example, cosmetic and personal and health care products such as creams, lotions, shampoo, toothpaste, perfumes and the like may be packaged in containers with an outside layer comprising the bimodal ionomer. Containers include jars, bottles, vials, tubs and the like. Laminated tubes are useful for packaging personal care products such as toothpaste and shampoo. Laminated tubes are prepared by forming a flat sheet into an open-ended hollow cylinder, crimping and sealing one end of the cylinder and sealing the other end to a closure fitment, wherein the fitment optionally has a closure means such as a screw cap or flip cap.

Of note are films comprising the bimodal ionomer composition that are printed, colored, pigmented, embossed, textured and/or the like. Such films are useful for advertising or decorative displays, including indoor signage, outdoor signage, vehicle signage, billboards and the like. The good printablility and adherence to metal (e.g. aluminum) and fabrics of bimodal ionomerfilms is useful for these purposes. The high transparency of bimodal ionomer films make them especially useful for being backlit in such displays.

Some shaped articles may be prepared by thermoforming processes, in which a thermoplastic film or sheet is heated above its softening temperature and formed into a desired shape. This formable sheet of a film or laminate is usually referred to as a forming web. Various systems and devices are used in a thermoforming process, often accompanied by vacuum-assist and plug-assist components to provide the proper forming of the forming web into a predetermined shape. Thermoforming processes and systems are well known.

Thermoformed articles may have a shape in which a multilayer sheet of material forms a concave surface such as a tray, cup, can, bucket, tub, box or bowl. The flat sheet is heated (for example by a 315°C black-body radiator) from above and below the sheet during a dwell time (for example for 30 to 40 seconds) during which time the surface temperature of the sheet will rise toward the nominal forming temperature of the sheet. At the end of the heat-cycle the sheet is immediately positioned over an unheated, optionally cooled cavity mold and clamped to the mold perimeter. Vacuum from within the mold during a short period (for example two seconds) draws the sheet into the mold. After a cooling period the thermoformed article is ejected from the mold. Alternatively, a plug may force the softened sheet into the cavity mold. Either method provides an article in which the sheet is stretched or drawn into a shape having a thinner cross-section and a greater surface area than the sheet had originally.

Thermoformed articles are often used as containers for packaging various consumer goods. Thermoformed articles may also be useful for preparing covers that are shape-matched to an article, for example a soft, protective cover for a keyboard. The cover conforms substantially to the shape of the keyboard and is flexible, so that it may remain in place during typing.

Another shape-conforming article is a protective covering affixed to the front of a vehicle to prevent damage from road debris, such as chipping or scratching of the paint or clear-coat finish. The transparent, high-gloss non-yellowing character of the bimodal ionomer composition makes it very suitable for such applications since it protects the finish without obscuring it. The covering may be prepared from sheets of the bimodal ionomer composition by various combinations of molding, cutting, folding, bonding, thermoforming, and the like.

Bimodal ionomer molded articles, such as containers, closures, and films are useful for packaging goods such as foodstuffs, cosmetics, health and personal care products, pharmaceutical products and the like.

Containers include trays, cups, cans, buckets, tubs, boxes, bowls, bottles, vials, jars, tubes, and the like. A container may be useful for packaging liquids such as water, milk, and other beverages. Alternatively, it may contain medicines, pharmaceuticals or personal care products. Other liquids that may be packaged in bottles include foods such as edible oils, syrups, sauces, and purees such as baby foods. Powders, granules and other flowable solids may also be packaged in bottles.

Injection molded hollow articles suitable as bottle preforms are examples of molded articles. Examples of blow-molded articles include containers such as blown bottles. In the bottle and container industry, the blow molding of injection-molded preforms has gained wide acceptance. An outside layer comprising the bimodal ionomer composition provides a soft feel and scratch resistance to bottles.

Injection molding a bottle preform may be conducted by transporting a molten material of the various layers into a mold and allowing the molten materials to cool. The molding provides an article that is substantially a tube with an open end and a closed end encompassing a hollow volume. The open end provides the neck of the bottle and the closed end provides the base of the bottle after subsequent blow molding. The molding may be such that various flanges and protrusions at the open end provide strengthening ribs and/or closure means, for example screw threads for a cap. For a multilayer preform molding, the molten materials may be injected into the mold from an annular die such that they form a laminar flow of concentric layers. The molten materials are introduced into the mold such that the material for the outside bimodal ionomer layer and the inside layer enter the mold cavity before the material for the inner layer(s) enters and form a leading edge of the laminar flow through the cavity. For a period of time, the layers enter the mold cavity in a layered concentric laminar flow. Next, flow of the material for the inner layer(s) is halted and the material for the outside and inside layers provides a trailing edge of the laminar flow. The flow continues until the entire cavity is filled and the trailing edge seals or fuses to itself to form the closed end of the preform.

To prepare a bottle, the preform may be reheated and biaxially expanded by simultaneous axial stretching and blowing in a shaped mold so that it assumes the desired shape. The neck region is not affected by the blow molding operation while the bottom and particularly the walls of the preform are stretched and thinned.

Extrusion blow molding may be used to prepare containers having an outside layer of the bimodal ionomer composition. In this technique, a multilayer flow of molten polymers is continuously extruded in a tubular shape. When the tube reaches a desired length, the mold closes and a parison is cut. The bottom of the parison is pinched closed and the top is held in place with a set of holding jaws. Container formation is completed by applying a vacuum on the mold-side of the container and blowing air into the interior of the container, causing the parison to conform to the shape of the mold. Optionally, the container may be filled with a product and sealed during its formation (a blow-fill-seal process).

Other examples of molded articles include injection molded or compression molded caps or closures for containers. Most containers have closures or caps to adequately seal the contents of a container against leakage from or into the container. In many instances, the cap is designed for repeated removal and replacement as the consumer accesses the contents of the container. A surface layer of the bimodal ionomer provides a soft feel for such caps and closures.

Closures or caps may be prepared by injection molding or compression molding. A cap may consist of a top and a depending skirt that close around the neck of the container. Caps may comprise continuous or discontinuous threads that provide screw closures to the container and/or snap closures. They may also incorporate dispensing features, tamper-evidence features and child resistant features. Other decorative or functional features may also be present. They may also include combinations with other materials (e.g., caps having metal lid portions or portions utilizing plastic materials other than a bimodal ionomer). Linerless caps may be molded from a bimodal ionomer composition. Alternatively, caps may have a separate liner that is inserted into the shell of the cap. A liner may be compression molded into the shell of the cap. Other closures include plastic stoppers or "corks" that are inserted into the opening of a container such as a wine bottle or perfume bottle.

In overmolding, the bimodal ionomer composition is molded over or around at least a portion of a substrate, such as a metal or plastic piece. The substrate is placed within the mold tooling of an injection-molding machine. The mold tooling when closed defines a cavity sized to receive the substrate in preparation for overmolding with the injection molding bimodal ionomer material. The interior walls of the mold tooling define the shape of the final overmolded piece. The mold tooling may include inwardly projecting pins, which serve to position and secure the substrate within the tooling during the injection process. The pins are retracted by pressure response pin retractors into the mold tooling near the end of the injection cycle. A sprue through which the injection molding material is injected is also present in the mold tooling.

When the heated and optionally plasticized bimodal ionomer molding material is injected under pressure by the injection-molding machine, the molding material flows in through the sprue and fills the cavity. The internal pressure within the cavity increases when the mold cavity is completely filled. The pins that position the substrate within the cavity are connected to pressure sensitive pin retractors. When the pressure in the mold cavity reaches a predetermined level, the pins retract into the mold cavity wall, and the molding material fills the space vacated by the pins. Upon completion of the overmolding process, the mold tooling is opened and the completed shaped article is ejected.

The resulting article has a casing of the bimodal ionomer composition over at least a portion of the substrate. The overmolded casings may have a wall thickness of between about 0.005 inches to over one inch, depending on the desired exterior shape of the completed assembly and the shape of the substrate. The wall thickness of the casing may be uniform or vary at various locations about the substrate; however, for most applications the wall thickness may be less than 0.5 inch or less than 0.1 inch.

Profiles are defined by having a particular shape and by their process of manufacture known as profile extrusion. Profiles are fabricated by melt extrusion processes that begin by extruding a thermoplastic multilayer melt flow in which at least one layer comprises the bimodal ionomer composition through an orifice of a die forming an extrudate capable of maintaining a desired shape. The extrudate may be drawn into its final dimensions while maintaining the desired shape and then quenched in air or a water bath to set the shape, thereby producing a profile. In the formation of simple profiles, the extrudate maintains shape without any structural assistance. With more complex shapes, support means may be used to assist in shape retention. Preferably, the bimodal ionomer composition comprises the outside layer of the profile to provide a soft-touch scratch resistant surface of the profile.

A common shape of a profile is tubing. Tubing assemblies for the packaging and transport of liquids and vapors are well known and the tubing may be in nearly constant contact with fluids and additives. Tubing may be used in packaging, storage and transfer of consumable fluids, for example beverages, and in medical applications, for example in packaging, storage and transfer of solutions for intravenous treatment. Other profile extruded articles include wires and cables with a jacket comprising the bimodal ionomer composition.

In addition to use as packaging materials, the shaped articles or fabrics may be used in a wide variety of applications where soft feel and scratch resistance properties are desired, such as in medical, health care and personal care applications, food preparation and storage, clothing and apparel, construction and industrial applications.

Coated fabrics may be used for clothing, drapes, building furnishings, tents, tarpaulins, automotive interiors, banners and signs, and other applications which require high wear resistant properties. Clothing and apparel applications include protective apparel such as raincoats, sportswear, shoes and shoe linings, hats, helmets, watch bands and the like. Coated structures may also comprise at least one bimodal ionomer layer and a printed or unprinted paper or paperboard layer such as gift wrap and gift boxes.

Household and personal items include hair setting and styling utensils, combs and other personal care utensils, eyeglasses, telephones, computer mouse units and mouse pads, keypads, keypad covers, video displays, writing utensils, calculators, cameras, pails, garbage containers, game boards and pieces, toys, credit cards, books, purses, wallets and card cases, umbrella handles, and furniture. The bimodal ionomer composition may provide a protective surface for household appliances such as refrigerators, dishwashers, washing machines, dryers, microwaves ovens and the like.

The wear resistant coated structures may be used for artificial leather furniture including upholstery, footwear, and covers of books and binders. Artificial leather is a multilayer structure that may comprise a thin protective surface layer, a printed, textured thermoplastic (such as PVC) layer, a thermoplastic (such as PVC) foam layer and a fabric layer. The bimodal ionomer compositions described herein is used as the protective surface layer.

The bimodal ionomer composition provides a soft protective surface for wood, metal, stone, ceramic, and glass substrates used in construction. Construction and building fumishing applications include films, sheets and fabrics used for wallcoverings, flooding tiles or sheets, floor mats, building panels, glazing, and other surfaces. Other building furnishings include linings or drapes for lockers, stables, barns, medical treatment rooms, and the like, shelf and drawer liners, shower curtains, floor mats and the like. Tabletops, counters and other surfaces may be fabricated with a bimodal ionomer surface layer. Shaped articles may be used for construction materials such as composite lumber. Other shaped articles include fittings such as toilet seats, door handles and other hardware that will be touched or handled where soft feel and scratch resistance is desirable.

Industrial applications include machine and vehicle parts that come into contact with hands such as steering wheels, handles, knobs, tool handles, and the like, and wires. Overmolding is a useful process for preparing such articles.

The invention also provides a method of using high frequency electromagnetic radiation to bond the bimodal ionomer composition to at least a portion of the surface of a first substrate and an optional second substrate (HF welding). The method is useful for preparing multilayer articles.

The bimodal ionomer composition may be used in the form of a multilayer film or sheet, powder or granule.

The method may comprise adhering the surface of the bimodal ionomer composition, either directly or through an intervening layer, to at least a portion of the surface of another substrate prior to the HF welding.

The method of adhering includes extrusion lamination, extrusion coating, coextrusion lamination and coextrusion coating, lamination, calendering lamination, adhesive-aided lamination, thermal lamination, sealing, thermal welding using hot roll lamination, flame lamination, and heat sealing, RF welding, powder scattering, powder dot and paste dot processes.

The substrates are independently selected from the group consisting of thermoplastic film and sheet, cellular foams, woven, knitted and non-woven fabrics, paper, pulp and paperboard products, wood and wood products, metal, glass, stone, ceramic, and leather and leather-like products, thermoplastic resins, thermoset resins, and a bimodal ionomer composition. Again, the suitable substrates are described at greater length above.

The method also includes the method wherein a bimodal ionomer film is the first substrate; comprising layering two sheets of bimodal ionomer film, or folding the same bimodal ionomer film onto itself; and sealing around a perimeter of the sheet(s) to form a bag or a pouch by applying high frequency electromagnetic radiation.

This invention further provides articles of manufacture comprising a surface layer comprising the bimodal ionomer composition described above, including tarpaulins, banners, signage, upholstery, clothing including waterproof clothing such as rain coats, protective drapes, automotive interior linings, projection screens, leather goods, appliqués, decorative films, decorative wraps, decorative boxes, book covers, binders, tubing, packaging including flexible and rigid packages, bags, pouches for containing medical solutions (IV bags), thermoformed articles, wires, skis, ski boots, snow boards and skate boards, footwear, protective covers, wall coverings, window shade or drapery, key board protective covers, decorative patches for footwear, flexible packaging, rigid packaging, bags, and any other article of manufacture substantially as shown and described herein.

### EXAMPLES

The following Examples are provided to describe the invention in further detail. These Examples, which set forth a preferred mode presently contemplated for carrying out the invention, are intended to illustrate and not to limit the invention.

### Materials Used

The abbreviations used in these Examples for high copolymers are identified in Table A, those for low copolymers in Table B, and those for ionomers in Table C, above.

Concentrates of neutralizing agents include:
NA-1: a blend of ZnO and zinc acetate.
NA-2: 50 weight % of Mg(OH)₂ in HC-3.

Films were prepared on a 28mm twin screw extruder and plaques were prepared on an injection molding machine.

### Examples 1-8

A blend of HC-3 and LC-2 at 90:10 blend ratio was neutralized to 70% with NA-1 using a single screw extruder to prepare a bimodal ionomer having MI of 1.35 (BMI-1). A blend of HC-3 and LC-2 at 80:20 blend ratio was neutralized with NA-2 using a single screw extruder to prepare a bimodal ionomer having MI of 4.5 (BMI-2). BMI-1 was mixed with I-3, I-4 and/or BMI-2 as summarized in Table 1, below. These compositions were extrusion blown or cast into films or sheets of 2 to 50 mils thickness that are designated Examples 1-8. These films were tested for RF weldability and scratch resistance as described below.

### RF Welding

The Radio Frequency (RF) welding study was conducted by using a Solidyne Industrial RF Generator that has a maximum output of 10 kW and operates at 27 MHz. Two separate plastic film sheets were placed between two electrodes. The electrodes were pressed together with compressed air at 60 psi on a two-inch diameter ram. The electric field strength was adjusted from 2.0 kV to 9.5 kV by increasing or decreasing the voltage across the electrodes. In these examples, RF energy was applied to the film samples at 6.4 kV for 6 or 8 seconds of weld time, using an electrode gap (flats) of 0, counter setting of 90 and 8 5-mil Kapton buffers, and then the welded sample was held together under pressure for 4 seconds dwell time, allowing the melted polymer to set. The two layers of the HF sealed films were peeled apart using a T-peel test to assess seal strength, which was rated as follows:
Good: the two films cannot be separated without rupture of the seal or film tear.
Poor: the two films can be separated with ease.
No: The two films did not seal under the HF treatment.

The results of the RF seal study are reported in Table 1.

**Table 1**

| Example | Composition | Weld Time (s) | Weld Results |
|---|---|---|---|
| 1 | BMI-1 | 6.0 | Good |
| 2 | 85% BMI-1 + 15% I-3 | 6.0 | Good |
| 3 | 75% BMI-1 + 25% I-3 | 6.0 | Good |
| 4 | 85% BMI-1 + 15% I-4 | 6.0 | Good |
| 5 | 75% BMI-1 + 25% I-4 | 6.0 | Good |
| 6 | 50% BMI-1 +50% BMI-2 | 8.0 | Good |
| 7 | 42.5% BMI-1 +42.5% BMI-2 +15% I-3 | 6.0 | Good |
| 8 | 37.5% BMI-1 +37.5% BMI-2 + 25% I-3 | 6.0 | Good |

### Scratch Resistance

Test films or plaques were tested for scratch resistance using a nano-scratch tester manufactured by CSM Instruments (Switzerland) according to ASTM D7187. Forces of 10 and 50 microNewtons were applied to an indenter with a 20 um diameter indenter tip that was drawn over the surface of the plaque. This apparatus measures the force in Newtons at which a scratch mark is visible on the surface. Residual depth was measured after 2 minutes relaxation from the initial micro-scratch test. Commercial samples of TPU-coated fabric from a banner material (C1) and a TPU monolayer film from a raincoat material (C2) were used as comparative samples. The results for two tests of each material are reported in Tables 2 and 3.

**Table 2**

| 50 microNewton load force with a 20 um diameter indenter tip | | | | | | |
|---|---|---|---|---|---|---|
| | Penetration | Depth (um) | Residual | Depth (um) | Recovery | |
| Example | 1 | 2 | 1 | 2 | 1 | 2 |
| C1 | 26.45 | 52.07 | 2.50 | 1.55 | 91% | 97% |
| C2 | 35.89 | 36.02 | 1.19 | 1.44 | 97% | 96% |
| 1 | 43.50 | 46.22 | 4.16 | 4.22 | 90% | 91% |
| 2 | 36.23 | 36.28 | 3.66 | 3.59 | 90% | 90% |
| 3 | 34.51 | 34.30 | 3.57 | 3.55 | 90% | 90% |
| 4 | 27.29 | 27.01 | 2.12 | 2.10 | 92% | 92% |
| 5 | 29.08 | 29.20 | 3.17 | 3.31 | 89% | 89% |
| 6 | 31.44 | 31.46 | 2.60 | 2.59 | 92% | 92% |
| 7 | 28.29 | 28.38 | 2.57 | 2.61 | 91% | 91% |
| 8 | 26.48 | 26.45 | 2.52 | 2.50 | 90% | 91% |

**Table 3**

| 10 microNewton load force with a 20 um diameter indenter tip | | | | | | |
|---|---|---|---|---|---|---|
| | Penetration | Depth (um) | Residual | Depth (um) | Recovery | |
| Example | 1 | 2 | 1 | 2 | 1 | 2 |
| C1 | 7.11 | 20.16 | 0.45 | 0.60 | 94% | 97% |
| C2 | 11.66 | 9.98 | 0.43 | 0.91 | 96% | 91% |
| 1 | 14.80 | 14.40 | 1.07 | 1.07 | 93% | 93% |
| 2 | 12.63 | 12.88 | 0.87 | 1.02 | 93% | 92% |
| 3 | 10.47 | 10.58 | 0.69 | 0.75 | 93% | 93% |
| 4 | 10.39 | 10.37 | 0.74 | 0.67 | 93% | 94% |
| 5 | 8.45 | 8.60 | 0.61 | 0.74 | 93% | 91% |
| 6 | 9.30 | 9.29 | 0.52 | 0.49 | 94% | 95% |
| 7 | 8.04 | 7.98 | 0.50 | 0.46 | 94% | 94% |
| 8 | 7.36 | 7.11 | 0.48 | 0.45 | 93% | 94% |

### Examples 9-10

Blends of HC-1 and LC-3 at 90:10 (Example 9) and 80:20 (Example 10) blend ratios were neutralized on a single screw extruder with NA-2 to prepare bimodal ionomers with the level of neutralization indicated below.

| | | |
|---|---|---|
| Example | 9 | 10 |
| HC-1 weight % | 90 | 80 |
| LC-3 weight % | 10 | 20 |
| Nominal Neutralization % | 70 | 75 |
| MI at 190°C | 1 | 1 |

### Examples 11-14

A pellet blend of 90 weight % of Ionomer I-1 and 10 weight % of LC-3 was melt blended and neutralized with NA-2 to a nominal neutralization level of 70 % in a twin screw extruder to prepare bimodal ionomer BMI-3. A pellet blend of 90 weight % of lonomer I-2 and 10 weight % of LC-4 was melt blended and neutralized with a Na₂CO₃ concentrate to a nominal neutralization level of 60 % in a twin screw extruder to prepare bimodal ionomer BMI-4. Blends were then prepared by melt blending on a twin screw extruder at 50:50 ratio of the bimodal ionomers, i.e. BMI-3, BMI-4 and the conventional ionomers, i.e. lonomer I-1 and lonomer I-2.

| Example | 11 | 12 | 13 | 14 |
|---|---|---|---|---|
| BMI-3, weight % | 50 | - | 50 | - |
| BMI-4, weight % | 50 | 50 | - | 100 |
| I-1, weight % | - | 50 | - | - |
| I-2, weight % | - | - | 50 | - |
| MI | 0.6 | 0.6 | NA | 0.6 |

### Examples 15-17

Bimodal ionomers based on Na and Zn ionomers containing 11 % MAA, i.e. lonomer I-5 and lonomer I-6 respectively, and LC-3 at 90:10 ratio were prepared on a twin screw extruder under the blending/neutralization conditions similar to the above examples using a Na₂CO₃ concentrate or NA-1.

| Example | 15 | 16 | 17 |
|---|---|---|---|
| BMI-5 | 100 | -- | 50 |
| BMI-6 | -- | 100 | 50 |
| Nominal Neutralization (%) | 75 | 75 | 75 |
| MI | 1 | 2 | 1.8 |

### Example 18

A blend of HC-2 and LC-3 at 90:10 weight ratio was neutralized on a single screw extruder with NA-2 to prepare a bimodal ionomer with MI of 2 g/10 min and a nominal neutralization level of 63%.

### Example 19

A blend of lonomer I-7 and LC-4 at 90:10 weight ratio was neutralized on a single screw extruder with NA-1 to provide BMI-7.

### Example 20

A blend of lonomer I-8 and LC-4 at 90:10 weight ratio was neutralized on a single screw extruder with a Na₂CO₃ concentrate to provide BMI-8.

### Examples 21-24

HC-1 was partially neutralized (about 51%) with Mg(OH)₂ concentrate NA-2 on a single screw extruder and subsequently blended with LC-1 at 90:10 (Example 21) and 85:15 (Example 22) ratios and further neutralized with NA-2 to maintain approximately 51% neutralization.

HC-1 was also partially neutralized (about 51%) with NA-1 on a single screw extruder and subsequently blended with LC-1 at 90:10 (Example 23) and 85:15 (Example 24) ratios.

### Examples 25-28

The composition of Example 8 was extrusion coated onto corona-treated paper using a CLOEREN EBR 40-inch slot die, with deckle opening at 26 in, plug at 2.25 in, blade at 1.5 in, lead in -0.5 in and air gap 6 in. The matte finish chill roll was set at 70 °F, with an EDLON-TEFLON pressure roll at nip roll pressure of 60 psi. The following different sets of conditions were used:
1.0 and 0.5 and 0.25 mil thickness at 450°F resin melt temperature with 300 feet/min line speed with 4.0kW corona treatment.
1.0 mil thickness at 550°F resin melt temperature with 150 feet/min line speed with 5.3kW corona treatment.

The process ran smoothly and produced coated paper having a satisfactory hand, with good adhesion of the composition to the paper.

### Examples 29-31

The compositions of Examples 1 and 3 were extrusion coated onto corona-treated (0.9 kW/square foot) fabric using a CLOEREN EBR 40-inch slot die at 530 °F, with deckle opening at 26 inches, plug at 2.25 inches, blade at 1.5 inches, lead in -0.5 inches and air gap 6 inches. The matte finish chill roll was set at 70 °F, with an EDLON-TEFLON pressure roll at nip roll pressure of 60 psi. Line speed was 70 feet/min. The compositions were coated at 5.0 mil thickness.

Coated fabrics were prepared by coextrusion of (1) a 2.0-mil (0.050 mm) layer of a composition of 75 weight % of Example 1 and 25 weight % of lonomer I-9; and either
(2a) a 8.0-mil (0.203 mm) layer of a composition of 20 weight % of an ethylene copolymer with 9 weight % of ethyl hydrogen maleate (MI of 8 g/10 min) and 80 weight % of an ethylene copolymer with 20 weight % of methyl acrylate (wherein the composition has 1.8 weight % of copolymerized ethyl hydrogen maleate);
or (2b) a 8.0-mil (0.203 mm) layer of a composition of 60 weight % of an ethylene copolymer with 27 weight % of n-butyl acrylate (MI= 4 g/10 min), 20 weight % of an ethylene copolymer with 35 weight % of n-butyl acrylate(MI= 40 g/10 min), and 20 weight % of an ethylene copolymer with 9 weight % of ethyl hydrogen maleate (MI of 8 g/10 min), the blend having MI of 15.4 g/10 min;
onto fabric to provide a three-layer structure with a skin layer of the bimodal ionomer composition and an inner bulk layer of either (2a) or (2b) adhered to the fabric substrate.

The coextrusion coating was performed using a Sano 4-extruder, 5-layer coextrusion coating and coextrusion cast film line. The components of the composition for layer (1) were pellet blended immediately before use to minimize moisture absorption. The composition (1) was placed in one extruder and passed through a flat die to provide a 2.0-mil (0.050 mm) layer. The compositions (2a) or (2b) were placed in two extruders, each feeding a flat die to provide a 4.0-mil (0.102 mm) layer (total of 8.0 mils (0.203 mm)). Kraft paper was used as a backing layer and fabric drop sheets were placed between the Kraft paper and the polymer curtain during the coextrusion coating. The multilayer structure was passed through a nip with a chill roller in contact with layer (1) to provide the final coated fabric structure.

Several different type of fabric samples were used as substrates. The samples were varied in one or more of weight (gm/meter² or lb/ft²), weaving type or non-woven, and sizing method. The substrate types included polypropylene non-woven, polyester non-woven, polypropylene woven, polyester woven, and cotton woven, nylon woven, and polyester/cotton blend woven fabrics. The extrusion coating and coextrusion coating processes ran smoothly and produced coated fabrics having a satisfactory hand, with good adhesion of the coatings to the fabrics.

Additional example compositions were prepared as summarized in Table 4. Example 32 was passed through the extruder twice to replicate the heat history experienced by the other examples when blended with the conventional ionomer. Cast films were prepared and the Graves Tear was assessed according to ASTM procedure D1004. Internal Haze was measured according to ASTM procedure D1003 (Rev 92). MD = machine direction, TD = transverse direction. The tensile properties of the cast films are summarized in Table 5.

**Table 4**

| 20-25 mil cast films | | | | | | | | | |
|---|---|---|---|---|---|---|---|---|---|
| | Weight % | | | | | | Graves Tear | | |
| Example | BMI-1 | I-3 | I-9 | I-10 | I-11 | BMI-2 | MD (kg/cm) | TD (kg/cm) | Haze |
| 32 | 100 (2 passes) | 0 | 0 | 0 | 0 | 0 | 39 | 41 | 0 |
| 33 | 100 | 0 | 0 | 0 | 0 | 0 | 39 | 41 | 0 |
| 34 | 75 | 25 | 0 | 0 | 0 | 0 | 45 | 45 | 0 |
| 35 | 50 | 50 | 0 | 0 | 0 | 0 | 54 | 63 | 21.07 |
| 36 | 75 | 0 | 25 | 0 | 0 | 0 | 41 | 47 | 0 |
| 37 | 50 | 0 | 50 | 0 | 0 | 0 | 55 | 61 | 13.67 |
| 38 | 75 | 0 | 0 | 25 | 0 | 0 | 50 | 54 | 0 |
| 39 | 50 | 0 | 0 | 50 | 0 | 0 | 61 | 63 | 0 |
| 40 | 75 | 0 | 0 | 0 | 25 | 0 | 54 | 59 | 0 |
| 41 | 50 | 0 | 0 | 0 | 50 | 0 | 73 | 77 | 3.5 |
| 42 | 0 | 0 | 0 | 0 | 0 | 100 | 61 | 61 | 0 |

**Table 5**

| | MD | | | | TD | | | |
|---|---|---|---|---|---|---|---|---|
| Example | Yield point (MPa (psi)) | Yield elongation (MPa (psi)) | Tensile strength (MPa (psi)) | Elongation at break (%) | Yield point (MPa (psi)) | Yield elongation (MPa (psi)) | Tensile strength (MPa (psi)) | Elongation at break (%) |
| 32 | 3.92 (568) | 0.70 (101) | 8.43 (1222) | 980 | 3.87 (562) | 0.69 (100) | 7.98 (1157) | 901 |
| 33 | 3.81 (552) | 0.65 (94) | 8.91 (1293) | 939 | 3.93 (570) | 0.69 (100) | 0.88 (128) | 915 |
| 34 | 5.85 (848) | 0.53 (77) | 9.09 (1318) | 629 | 5.60 (812) | 0.55 (80) | 8.25 (1197) | 604 |
| 35 | 9.49 (1376) | 023 (34) | 17.93 (2600) | 541 | 8.62 (1250) | 0.26 (38) | 11.27 (1635) | 405 |
| 36 | 6.00 (870) | 0.35(51) | 9.03(1310) | 603 | 6.07 (880) | 0.56 (81) | 7.66 (1111) | 538 |
| 37 | 9.92 (1439) | 0.32 (47) | 19.33 (2804) | 597 | 8.59 (1246) | 0.25 (36) | 11.25 (1632) | 462 |
| 38 | 5.57 (808) | 0.56 (81) | 11.23 (1630) | 732 | 5.69 (825) | 0.55 (80) | 10.44 (1514) | 723 |
| 39 | 8.67 (1257) | 0.26 (38) | 19.48 (2825) | 680 | 8.22 (1192) | 0.29 (42) | 14.48 (2100) | 569 |
| 40 | 6.62 (960) | 0.32 (47) | 14.22 (2063) | 689 | 6.37 (924) | 0.32 (46) | 12.37 (1794) | 642 |
| 41 | 11.53 (1673) | 0.20 (29) | 24.17 (3506) | 632 | 10.85 (1573) | 0.26 (38) | 19.36 (2808) | 539 |
| 42 | 8.44 (1224) | 0.88 (128) | 15.50 (2248) | 808 | 8.12 (1177) | 0.85 (123) | 14.38 (2086) | 737 |

The compositions were also injection molded into standard test plaques 3.175 mm (0.125 inches) thick and cut into specimens 12.7 mm (0.5 inches wide) and 76.2 to 127 mm (3 to 5 inches) in length. The samples were conditioned for two weeks at ASTM lab conditions (22.8°C (73°F) and 50% RH). Shore hardness, flex modulus and Tabor abrasion were measured (Table 6).

**Table 6**

| | Hardness | | | Tabor Abrasion (H-18/1000g/1000 cycles) |
|---|---|---|---|---|
| Example | Shore A | Shore D | Flex Modulus (Mpa) | Weight Loss (mg/1000 cycles) |
| 32 | 78.8 | 24.8 | 33.5 | 196 |
| 33 | NA | NA | NA | NA |
| 34 | 89.3 | 34.6 | 71.8 | 216 |
| 35 | 91.9 | 43.9 | 140.4 | 258 |
| 36 | 89.6 | 34.3 | 68.2 | 199 |
| 37 | 93.2 | 42.2 | 124.8 | 244 |
| 38 | 89.2 | 32.8 | 68.2 | 181 |
| 39 | 92.2 | 41.4 | 116.1 | 157 |
| 40 | 90.8 | 36.9 | 79.6 | 147 |
| 41 | 93.4 | 45.4 | 181.8 | 140 |
| 42 | 88.3 | 37.9 | 66.9 | 165 |

While certain of the preferred embodiments of the present invention have been described and specifically exemplified above, it is not intended that the invention be limited to such embodiments.

## Claims

1. A multilayer article of manufacture wherein at least a portion of the surface of the article comprises a bimodal ionomer composition comprising or prepared from
(i) a copolymer comprising one or more E/X/Y copolymers wherein E represents copolymerized units of ethylene, X represents copolymerized units of a C₃ to C₈ α,β-ethylenically unsaturated carboxylic acid, and Y represents copolymerized units of a softening comonomer selected from the group consisting of vinyl acetate, alkyl acrylate and alkyl methacrylate, wherein the alkyl groups have from 1 to 8 carbon atoms, wherein X is 2 to 30 weight % of the E/X/Y copolymer, and Y is a finite amount to 45 weight % of the E/X/Y copolymer and wherein the E/X/Y copolymers have weight average molecular weight (Mw) in the range of 80,000 to 500,000 Da; and
(ii) a copolymer comprising one or more E/Z copolymers wherein E represents copolymerized units of ethylene and Z represents copolymerized units of acrylic acid or methacrylic acid wherein Z is 3 to 25 weight % of the E/Z copolymer and wherein the E/Z copolymers have Mw in the range of 2,000 to 30,000 Da;
wherein at least 35 % of the combined acidic groups in the E/X/Y copolymer and the E/Z copolymer are nominally neutralized with metal ions to the corresponding salts;
wherein the article of manufacture is selected from the group consisting of coated fabrics, coated papers, tarpaulins, banners, signage, upholstery, footwear, clothing, waterproof clothing, rain coats, protective drapes, protective covers, wall coverings, window shade or drapery, key board protective covers, automotive interior linings, projection screens, leather goods, appliqués, decorative films, decorative patches for footwear, decorative wraps, decorative boxes, book covers, binders, tubing, flexible packaging, bags, pouches for containing medical solutions, thermoformed articles, and wires.

2. The article of claim 1 selected from the group consisting of coated fabrics, coated papers, rain coats, and banners.

3. The article of claim 1 or claim 2 that is not spherical in shape .

4. A method for preparing the multilayer article of claims 1 to 3 comprising
(1) contacting a first surface of the bimodal ionomer composition of Claim 1 with at least a portion of the surface of a first substrate and optionally contacting a second surface of the bimodal ionomer composition with at least a portion of the surface of a second substrate;
(2) applying high frequency electromagnetic radiation, and optionally pressure, heat, or a combination thereof, to the bimodal ionomer composition, thereby softening or melting the bimodal ionomer composition:
(3) allowing the softened or melted bimodal ionomer composition to harden, thereby bonding the first surface of the bimodal ionomer composition to the first substrate and bonding the second surface of the bimodal ionomer composition to the second substrate when present;
wherein the first substrate and the optional second substrate are independently selected from the group consisting of thermoplastic film and sheet, cellular foams, woven, knitted and non-woven fabrics, paper, pulp and paperboard products, metal, glass, stone, ceramic, and leather and leather-like, thermoplastic resins, and bimodal ionomer compositions of Claim 1.

5. The method of Claim 4 comprising adhering the second surface of the bimodal ionomer composition, either directly or through an intervening layer, to at least a portion of the surface of a third substrate prior to step (1); wherein there is no second substrate and the third substrate is independently selected from the group consisting of thermoplastic film and sheet, cellular foams, woven, knitted and non-woven fabrics, paper, pulp and paperboard products, wood and wood products, metal, glass, stone, ceramic, and leather and leather-like products, thermoplastic resins, thermoset resins, and a second bimodal ionomer composition that may be the same as or different from the bimodal ionomer composition comprising
(i) a copolymer comprising one or more E/X/Y copolymers wherein E represents copolymerized units of ethylene, X represents copolymerized units of a C₃ to C₈ α,β-ethylenically unsaturated carboxylic acid, and Y represents copolymerized units of a softening comonomer selected from the group consisting of vinyl acetate, alkyl acrylate and alkyl methacrylate, wherein the alkyl groups have from 1 to 8 carbon atoms, wherein the amount of X is from 2 to 30 weight % of the E/X/Y copolymer, and Y is from 0 to 45 weight % of the E/X/Y copolymer, and wherein the E/X/Y copolymers have weight average molecular weight (Mw) in the range of 80,000 to 500,000 Da; and
(ii) a copolymer comprising one or more E/Z copolymers wherein E represents copolymerized units of ethylene and Z represents copolymerized units of acrylic acid or methacrylic acid, wherein the amount of Z is 3 to 25 weight % of the E/Z copolymer and wherein the E/Z copolymers have Mw in the range of 2,000 to 30,000 Da;
wherein at least 35 % of the combined acidic groups in the E/X/Y copolymer and the E/Z copolymer are nominally neutralized with metal ions to the corresponding salts.

6. The method of Claim 5 wherein the adhering comprises one or more processes selected from the group consisting of extrusion lamination, extrusion coating, coextrusion lamination, coextrusion coating, lamination, calendaring lamination, adhesive-aided lamination, sealing, thermal welding using hot roll lamination, flame lamination, heat sealing, radio frequency or high frequency welding, aqueous dispersion coationg, powder scattering, powder dot and paste dot processes.

7. The method of Claim 4 wherein the bimodal ionomer composition is in the form of a monolayer or multilayer film or sheet.

8. The method of Claim 4 wherein a bimodal ionomer film is the first substrate; comprising layering two sheets of bimodal ionomer film, or folding the same bimodal ionomer film onto itself; and sealing around a perimeter of the sheet(s) to form a bag or a pouch by applying high frequency electromagnetic radiation.

9. The method of Claim 4 wherein the bimodal ionomer composition is in the form of powder or granule.

## Patentansprüche

1. Mehrlagiger Herstellungsartikel, wobei mindestens ein Anteil der Oberfläche des Artikels eine bimodale Ionomerzusammensetzung umfasst, die Folgendes umfasst oder daraus hergestellt ist:
(i) einem Copolymer umfassend ein oder mehrere E/X/Y-Copolymere, wobei E copolymerisierte Einheiten von Ethylen darstellt, X copolymerisierte Einheiten einer α,β-ethylenisch ungesättigten C₃- bis C₈-Carbonsäure darstellt und Y copolymerisierte Einheiten eines erweichenden Comonomers darstellt ausgewählt aus der Gruppe bestehend aus Vinylacetat, Alkylacrylat und Alkylmethacrylat, wobei die Alkylgruppen 1 bis 8 Kohlenstoffatome aufweisen, wobei X 2 bis 30 Gew.-% des E/X/Y-Copolymers ausmacht und Y eine begrenzte Menge von bis zu 45 Gew.-% des E/X/Y-Copolymers ausmacht und wobei die E/X/Y-Copolymere ein gewichtsdurchschnittliches Molekulargewicht (Mw) im Bereich von 80.000 bis 500.000 Da aufweisen; und
(ii) einem Copolymer umfassend ein oder mehrere E/Z-Copolymere, wobei E copolymerisierte Einheiten von Ethylen darstellt und Z copolymerisierte Einheiten von Acrylsäure oder Methacrylsäure darstellt, wobei Z 3 bis 25 Gew.-% des E/Z-Copolymers ausmacht und wobei die E/Z-Copolymere ein Mw im Bereich von 2.000 bis 30.000 Da aufweisen;
wobei mindestens 35 % der kombinierten sauren Gruppen in dem E/X/Y-Copolymer und dem E/Z-Copolymer nominell mit Metallionen zu den entsprechenden Salzen neutralisiert werden;
wobei der Herstellungsartikel aus der Gruppe ausgewählt ist bestehend aus beschichteten Textilstoffen, beschichteten Papieren, Abdeckplanen, Flaggen, Beschilderungen, Polsterungen, Fußbekleidung, Bekleidung, wasserfester Bekleidung, Regenmänteln, Schutzumhängen, Schutzbedeckungen, Wandbedeckungen, Fensterrollläden oder -vorhängen, Tastaturschutzbedeckungen, Fahrzeuginnenauskleidungen, Projektionswänden, Lederwaren, Applikationen, dekorativen Folien, dekorativen Aufkleben für Fußbekleidung, dekorativen Überwürfen, dekorativen Schachteln, Buchumschlägen, Einbänden, Röhrenmaterial, flexibler Verpackung, Taschen, Beuteln zum Aufnehmen medizinischer Lösungen, wärmegeformten Artikeln und Drähten.

2. Artikel nach Anspruch 1, ausgewählt aus der Gruppe bestehend aus beschichteten Textilstoffen, beschichteten Papieren, Regenmänteln und Flaggen.

3. Artikel nach Anspruch 1 oder Anspruch 2, der nicht kugelförmig bezüglich der Gestalt ist.

4. Verfahren zum Herstellen des mehrlagigen Artikels nach den Ansprüchen 1 bis 3, umfassend
(1) das Kontaktieren einer ersten Oberfläche der bimodalen Ionomerzusammensetzung nach Anspruch 1 mit mindestens einem Anteil der Oberfläche eines ersten Substrats und wahlweise das Kontaktieren einer zweiten Oberfläche der bimodalen Ionomerzusammensetzung mit mindestens einem Anteil der Oberfläche eines zweiten Substrats;
(2) das Aufbringen von elektromagnetischer Hochfrequenzstrahlung und wahlweise von Druck, Hitze oder einer Kombination davon, auf die bimodale Ionomerzusammensetzung, wodurch die bimodale Ionomerzusammensetzung erweicht oder geschmolzen wird;
(3) das Gestatten, dass die erweichte oder geschmolzene bimodale Ionomerzusammensetzung sich erhärtet, wodurch die erste Oberfläche der bimodalen Ionomerzusammensetzung an das erste Substrat bondiert wird und die zweite Oberfläche der bimodalen Ionomerzusammensetzung an das zweite Substrat, liegt es vor, bondiert wird;
wobei das erste Substrat und das wahlweise zweite Substrat unabhängig aus der Gruppe ausgewählt werden bestehend aus Thermoplastfolien und -platten, Schaumstoffen, gewobenen, gestrickten und nichtgewobenen Textilstoffen, Papier, Pulpe-und Pappeprodukten, Metall, Glas, Stein, Keramik und Leder und lederähnlichen Substanzen, Thermoplastharzen und bimodalen Ionomerzusammensetzungen nach Anspruch 1.

5. Verfahren nach Anspruch 4 umfassend das Befestigen der zweiten Oberfläche der bimodalen Ionomerzusammensetzung entweder direkt oder durch eine dazwischen geschobene Schicht, an mindestens einen Anteil der Oberfläche eines dritten Substrats vor Schritt (1); wobei kein zweites Substrat vorliegt und das dritte Substrat unabhängig aus der Gruppe ausgewählt ist bestehend aus Thermoplastfolie und -platte, Schaumstoffen, gewobenen, gestrickten und nichtgewobenen Textilstoffen, Papier, Pulpe-und Kartonprodukten, Holz und Holzprodukten, Metall, Glas, Stein, Keramik und Leder und lederähnlichen Produkten, Thermoplastharzen, Duroplastharzen und einer zweiten bimodalen Ionomerzusammensetzung, die gleich wie oder verschieden von der bimodalen Ionomerzusammensetzung sein kann, umfassend
(i) ein Copolymer umfassend ein oder mehrere E/X/Y-Copolymere, wobei E copolymerisierte Einheiten von Ethylen darstellt, X copolymerisierte Einheiten einer α,β-ethylenisch ungesättigten C₃- bis C₈-Carbonsäure darstellt und Y copolymerisierte Einheiten eines erweichenden Comonomers darstellt ausgewählt aus der Gruppe bestehend aus Vinylacetat, Alkylacrylat und Alkylmethacrylat, wobei die Alkylgruppen 1 bis 8 Kohlenstoffatome aufweisen, wobei X 2 bis 30 Gew.-% des E/X/Y-Copolymers ausmacht und Y eine begrenzte Menge von bis zu 45 Gew.-% des E/X/Y-Copolymers ausmacht und wobei die E/X/Y-Copolymere ein gewichtsdurchschnittliches Molekulargewicht (Mw) im Bereich von 80.000 bis 500.000 Da aufweisen; und
(ii) ein Copolymer umfassend ein oder mehrere E/Z-Copolymere, wobei E copolymerisierte Einheiten von Ethylen darstellt und Z copolymerisierte Einheiten von Acrylsäure oder Methacrylsäure darstellt, wobei die Menge von Z 3 bis 25 Gew.-% des E/Z-Copolymers ausmacht und wobei die E/Z-Copolymere ein Mw im Bereich von 2.000 bis 30.000 Da aufweisen;
wobei mindestens 35 % der kombinierten sauren Gruppen in dem E/X/Y-Copolymer und dem E/Z-Copolymer nominell mit Metallionen zu den entsprechenden Salzen neutralisiert werden;

6. Verfahren nach Anspruch 5, wobei das Befestigen ein oder mehrere Verfahren umfasst ausgewählt aus der Gruppe bestehend aus Extrusionslaminieren, Extrusionsbeschichten, Coextrusionslaminieren, Coextrusionsbeschichten, Laminieren, Kalandrierlaminieren, klebstoffunterstütztem Laminieren, Versiegeln, Wärmeschweißen unter Anwendung von Heißwalzlamination, Flammenlaminieren, Heißversiegeln, Radiofrequenz- oder Hochfrequenzschweißen, Beschichten mit wässriger Dispersion, Pulverstreuung, Pulverpunkt- und Pastenpunktverfahren.

7. Verfahren nach Anspruch 4, wobei die bimodale Ionomerzusammensetzung in Form einer Einzellagen- oder Mehrlagenfolie oder -platte vorliegt.

8. Verfahren nach Anspruch 4, wobei eine bimodale Ionomerfolie das erste Substrat ist; umfassend das Übereinanderlegen von zwei Platten von bimodaler Ionomerfolie oder Falten derselben bimodalen Ionomerfolie auf sich selbst; und Versiegeln um einen Umfang der Platte(n) unter Bildung einer Tasche oder eines Beutels durch Aufbringen elektromagnetischer Hochfrequenzstrahlung.

9. Verfahren nach Anspruch 4, wobei die bimodale Ionomerzusammensetzung in Form von Pulver oder Granulat vorliegt.

## Revendications

1. Article multicouche de manufacture dans lequel au moins une portion de la surface de l'article comprend une composition ionomère bimodale comprenant ou préparée à partir
(i) d'un copolymère comprenant un ou plusieurs copolymère(s) E/X/Y où E représente des motifs copolymérisés d'éthylène, X représente des motifs copolymérisés d'un acide carboxylique α,β éthyléniquement insaturé en C₃ à C₈, et Y représente des motifs copolymérisés d'un comonomère de ramollissement sélectionné parmi le groupe constitué de l'acétate de vinyle, de l'acrylate d'alkyle et du méthacrylate d'alkyle, où les groupes alkyle ont de 1 à 8 atome(s) de carbone, où X est de 2 à 30 % en poids du copolymère E/X/Y, et Y est une quantité finie de 45 % en poids du copolymère E/X/Y et où les copolymères E/X/Y ont un poids moléculaire moyen en poids Mw situé dans la plage de 80 000 à 500 000 Da ;
(ii) d'un copolymère comprenant un ou plusieurs copolymère(s) E/Z où E représente des motifs copolymérisés d'éthylène et Z représente des motifs copolymérisés d'acide acrylique ou d'acide méthacrylique où Z est de 3 à 25 % en poids du copolymère E/Z et où les copolymères E/Z ont un Mw situé dans la plage de 2 000 à 30 000 Da ;
où au moins 35 % des groupes acides combinés dans le copolymère E/X/Y et le copolymère E/Z sont nominalement neutralisés avec des ions métalliques en les sels correspondants ;
où l'article de manufacture est sélectionné parmi le groupe constitué des textiles enduits, des papiers enduits, des prélarts, des bannières, des panneaux de signalisation, des rembourrages de meubles, des chaussures, des vêtements, des vêtements imperméables, des imperméables, des draps de protection, des couvertures de protection, des bâches murales, des stores ou des rideaux pour fenêtre, des housses de protection de clavier, des garnitures d'intérieur automobile, des écrans de projection, des articles en cuir, des éléments à appliquer, des films décoratifs, des timbres décoratifs pour les chaussures, des enveloppes décoratives, des boîtes décoratives, des couvertures de livre, des classeurs, des tubulures, des emballages souples, des sacs, des poches pour contenir des solutions pharmaceutiques, des articles thermoformés et des câbles.

2. Article selon la revendication 1, sélectionné parmi le groupe constitué des textiles enduits, des papiers enduits, des imperméables et des bannières.

3. Article selon la revendication 1 ou la revendication 2, qui n'est pas de forme sphérique.

4. Procédé de préparation de l'article multicouche selon les revendications 1 à 3 comprenant
(1) la mise en contact d'une première surface de la composition ionomère bimodale selon la revendication 1, avec au moins une portion de la surface d'un premier substrat et éventuellement la mise en contact d'une seconde surface de la composition ionomère bimodale avec au moins une portion de la surface d'un second substrat ;
(2) l'application d'un rayonnement électromagnétique de haute fréquence, et éventuellement de pression, de chaleur ou d'une combinaison de celles-ci, à la composition ionomère bimodale, ramollissant ou faisant fondre ainsi la composition ionomère bimodale ;
(3) le fait de laisser la composition ionomère bimodale ramollie ou fondue durcir, liant ainsi la première surface de la composition ionomère bimodale au premier substrat et la seconde surface de la composition ionomère bimodale au second substrat lorsqu'il est présent ;
où le premier substrat et le second substrat facultatif sont indépendamment sélectionnés parmi le groupe constitué d'un film et d'une feuille thermoplastique, de mousses alvéolaires, de textiles tissés, tricotés et non tissés, de produits à base de papier, de pâte à papier et de carton, du métal, du verre, de la pierre, de la céramique et du cuir et des produits en simili cuir, des résines thermoplastiques et des compositions ionomères bimodales selon la revendication 1.

5. Procédé selon la revendication 4, comprenant l'adhésion de la seconde surface de la composition ionomère bimodale, soit directement, soit à travers une couche d'intervention, à au moins une partie de la surface d'un troisième substrat avant l'étape (1) ; où il n'y a pas de second substrat et le troisième substrat est indépendamment sélectionné parmi le groupe constitué d'un film et d'une feuille thermoplastiques, des mousses alvéolaires, des textiles tissés, tricotés et non tissés, de produits à base de papier, de pulpe et de carton, du bois et de produits à base de bois, du métal, du verre, de la pierre, de la céramique et du cuir et des produits en simili cuir, des résines thermoplastiques, des résines thermodurcissables et d'une seconde composition ionomère bimodale qui peut être identique ou différente de la composition ionomère bimodale comprenant
(i) un copolymère comprenant un ou plusieurs copolymère(s) E/X/Y où E représente des motifs copolymérisés d'éthylène, X représente des motifs copolymérisés d'un acide carboxylique α,β éthyléniquement insaturé en C₃ à C₈, et Y représente des motifs copolymérisés d'un comonomère de ramollissement sélectionné parmi le groupe constitué de l'acétate de vinyle, de l'acrylate d'alkyle et du méthacrylate d'alkyle, où les groupes alkyle ont 1 à 8 atome(s) de carbone, où la quantité de X est de 2 à 30 % en poids du copolymère E/X/Y, et Y est de 0 à 45 % en poids du copolymère E/X/Y, et où les copolymères E/X/Y ont un poids moléculaire moyen en poids Mw situé dans la plage de 80 000 à 500 000 Da ; et
(ii) un copolymère comprenant un ou plusieurs copolymère(s) E/Z où E représente des motifs copolymérisés d'éthylène et Z représente des motifs copolymérisés d'acide acrylique ou d'acide méthacrylique, où la quantité de Z est de 3 à 25 % en poids du copolymère E/Z et où les copolymères E/Z ont un Mw situé dans la plage de 2 000 à 30 000 Da ;
où au moins 35 % des groupes acides combinés dans le copolymère E/X/Y et le copolymère E/Z sont nominalement neutralisés avec des ions métalliques en les sels correspondants ;

6. Procédé selon la revendication 5, dans lequel l'adhésion comprend un ou plusieurs procédé(s) sélectionné(s) parmi le groupe constitué des procédés de stratification avec extrusion, du revêtement avec extrusion, de la stratification avec coextrusion, du revêtement avec coextrusion, de la stratification, de la stratification par calandrage, de la stratification accompagnée d'une substance adhésive, du scellage, du soudage thermique utilisant une stratification à cylindre chaud, de la stratification à la flamme, du scellage thermique, du soudage avec radiofréquence ou haute fréquence, du revêtement avec dispersion aqueuse, de la pulvérisation de poudre, des procédés par points de poudre et par points de pâte.

7. Procédé selon la revendication 4, dans lequel la composition ionomère bimodale se présente sous la forme d'un film ou d'une feuille monocouche ou multicouche.

8. Procédé selon la revendication 4, dans lequel un film ionomère bimodal est le premier substrat ; comprenant la mise en couche de deux feuilles de film ionomère bimodal ou le pliage du même film ionomère bimodal sur lui-même ; et le scellage autour d'un périmètre de la (des) feuille(s) pour former un sac ou une poche par l'application d'un rayonnement électromagnétique de haute fréquence.

9. Procédé selon la revendication 4, dans lequel la composition ionomère bimodale se présente sous la forme d'une poudre ou d'une granule.
